# EUROPEAN PATENT SPECIFICATION

(11) **EP 2 793 104 B1**
(45) Date of publication and mention of the grant of the patent: **25.10.2017**
(21) Application number: 13005549.4
(22) Date of filing: 28.11.2013
(51) Int. Cl.: G06F 3/033, H04N 5/445, H04N 21/41, H04N 21/422

(54) **Image display device and method of operating the image display device**
Bildanzeigevorrichtung und Verfahren zum Betrieb der Bildanzeigevorrichtung
Dispositif d'affichage d'image et procédé de fonctionnement du dispositif d'affichage d'image

(30) Priority: 17.04.2013 KR 20130042397
(43) Date of publication of application: 22.10.2014
(73) Proprietor: LG Electronics Inc., Seoul (KR)
(72) Inventor: Song, Daesub, Gyeonggi-do (KR)
(74) Representative: Katérle, Axel

(56) References cited:
- KR-A- 20120 131 258
- US-A1- 2012 194 428
- US-A1- 2012 194 430

## Description

### BACKGROUND OF THE DISCLOSURE

### 1. Field of the Disclosure

The present invention relates to an image display device and a method of displaying the image display device and more particularly to an image display device that is capable of receiving a pointing signal from a spatial remote controller and a method of displaying the image display device.

### 2. Background of the Disclosure

An image display device is a device that receives and displays broadcast signals, records and reproduces a moving image, records and reproduces audio, or displays a user input signal and signals transmitted from a web server. Such an image display device includes a television set, a computer monitor, a projector, and a tablet PC.

The image display device has increasingly multiple functions. In the recent years, the image display device has been realized in the form of a multimedia player equipped with multiple functions including photographing, shooting of video, and gaming, in addition to basic functions of receiving broadcast and playing audio and video files. More recently, the image display device has been realized as a smart device (for example, a smart television). Therefore, the image display device not only has access to the Internet, but operates also in connection with a mobile terminal and a computer.

On the other hand, an external input device, independently of the image display device, such as a spatial remote controller is used to operate the image display device. The multiple functions of the image display device require the corresponding functions of the external input device.

In addition, the number of and types of image signals displayed through the image display device increase and services that can be provided through the image display device come in various types. Accordingly, keys displayed on the image display device increase in number and come in a variety of forms.

A user experiences difficulty selecting a specific key from various keys displayed on the image display device when controlling the operation of the image display device with the external input device. This is mainly due to a movement such as a trembling hand. Document US 2012/0194428 A1 discloses a method for operating an image display device for displaying a selectable area and a pointer and for changing a display state of the pointer when the pointer is located within the selectable area.

Document KR 2012 0131258 A discloses an image display device provided with an image region and an on screen display region wherein the speed, of a pointer moving across the image region or the on screen display, is changed to allow more accuracy of a selection within said regions.

### SUMMARY OF THE DISCLOSURE

Therefore, an aspect of the detailed description is to provide an image display device that is capable of changing a moving speed of a pointer on a region on which a key is displayed when selecting the key displayed on the image display device with a pointing signal transmitted from an external input device and a method of operating the image display device.

Another aspect of the detailed description is to provide an image display device that is capable of adjusting the extent to which a moving speed of a pointer is changed, depending on a size or form of a control key displayed on the image display device, and a method of operating the image display device.

To achieve these and other advantages and in accordance with the purpose of this specification, as embodied and broadly described herein, there is provided an image display device including a display unit on which a first region and a second region are displayed, the second region on which at least one object through which a function is activated with a pointing signal is displayed, an interface unit through which the pointing signal is received from a spatial remote controller, and a controller that, when a pointer displayed according to the received pointing signal is moved within the first region, performs control in such a manner that the pointer is moved at a first moving speed, and that, the pointer displayed according to the received pointing signal is moved within the second region, performs the control in such a manner that the pointer is moved at a second moving speed lower than the first moving speed.

In the image display device, the controller may adjust the second moving speed in proportion to an area of at least one of the object and the second region on which the object is displayed.

In the image display device, if the calculated transverse-direction length is greater than the calculated longitudinal-direction length, the controller may perform the control in such a manner that when the pointer is moved within the second region in the longitudinal direction, the pointer is moved at a third moving speed lower than the second moving speed, and if the calculated longitudinal-direction length is greater than the calculated transverse-direction length, the controller may perform the control in such a manner that when the pointer is moved within the second region in the transverse direction, the pointer is moved at the third moving speed lower than the second moving speed.

In the image display device, a command for triggering at least one of a first control mode and a second control mode that are different in how to determine whether to change the moving speed after the pointer enters the second region from the first region may be input from the spatial remote controller into the interface unit and in the first control mode, the controller may perform the control in such a manner that the pointer is moved at a predetermined moving speed on the first region and the second region, and in the second control mode, the controller may perform the control in such a manner that after entering the second region from the first region, the pointer is moved at a speed lower than the predetermined moving speed.

In the image display device, the controller may set speed information with respect to at least one of the first moving speed and the second moving speed, based on a user input.

The image display device may further include a storage unit that stores a usage pattern corresponding to the extent to which the spatial remote controller trembles, and the controller may determine the second moving speed according to the usage pattern stored in the storage unit.

In the image display device, the controller may perform the control in such a manner that the pointer is moved at the first moving speed according to the pointing signal for a predetermined time after the pointer enters the second region, and the pointer is moved at the second moving speed lower than the first moving speed according to the pointing signal when the predetermined time elapses after the pointer enters the second region.

In the image display device, when the pointer is positioned on a border region between the first region and the second region, the controller may perform the control in such a manner that the pointer is moved at the first moving speed, and when the pointer is moved out of the border region and enters the second region, the controller may perform the control in such a manner that the pointer is moved at the second moving speed lower than the first moving speed.

The image display device may further include an output unit that outs a sound effect, and when the pointer passes a border between the first region and the second region, the controller may perform the control in such a manner that the sound effect is output.

In the image display device, when the pointer passes a border between the first regions and the second region, the controller may generate a control signal for enabling the spatial remote controller to output a first vibration.

In the image display device, while the pointer is moved within the second region, the controller may perform the control in such a manner that a control signal for enabling the spatial remote controller to output a second vibration corresponding to the second moving speed.

In the image display device, the controller may output the pointer in such a manner that the pointer on the first region and the pointer on the second region are different in form from each other.

In the image display device, when the pointer is moved closer to the second region, the controller may change a form of the object displayed on the second region and outputs the object in the changed form.

In the image display device, the object may be an icon for executing an application.

To achieve these and other advantages and in accordance with the purpose of this specification, as embodied and broadly described herein, there is provided a method of operating an image display device including displaying a first region and a second region and displaying at least one object through which a function is activated with a pointing signal on the second region, receiving the pointing signal from a spatial remote controller, performing control in such a manner that a pointer is moved at a first moving speed, when the pointer displayed according to the received pointing signal is moved within the first region, and performing the control in such a manner that the pointer is moved at a second moving speed lower than the first moving speed, when the pointer displayed according to the received pointing signal is moved within the second region.

The method may further include adjusting the second moving speed in proportion to an area of at least one of the object and the second region on which the object is displayed.

The method may further include calculating a transverse-direction length and a longitudinal-direction length of the second region, and performing control in such a manner that when the pointer is moved within the second region in the longitudinal direction, the pointer is moved at a third moving speed lower than the second moving speed, if the calculated transverse-direction length is greater than the calculated longitudinal-direction length, the controller performs the control and performing the control in such a manner that when the pointer is moved within the second region in the transverse direction, the pointer is moved at the third moving speed lower than the second moving speed, of the calculated longitudinal-direction length is greater than the calculated transverse-direction length.

The method may further include setting speed information with respect to at least one of the first moving speed and the second moving speed, based on a user input.

The method may further include outputting a sound effect when the pointer passes a border between the first region and the second region.

The method may further include generating a control signal for enabling the spatial remote controller to output a first vibration, when the pointer passes a border between the first regions and the second region.

The method may further include generating a control signal for enabling the spatial remote controller to output a second vibration corresponding to the second moving speed, while the pointer is moved within the second region.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a block diagram illustrating an image display device according to the present invention and an external input device;
FIG. 2 is a block diagram illustrating in detail the external input device in FIG.1;
FIG. 3 is a diagram illustrating relative movements of the image display device according to the present invention and the external input device;
FIG. 4 is an exemplary flowchart for describing a method of operating the image display device according to the embodiment of the present invention;
FIGS. 5A to 5F are diagrams for describing the flowchart in FIG. 4 according to the embodiment of the present invention;
FIG. 6 is an exemplary flowchart for describing the method of operating the image display device in which a moving speed of a pointer varies depending on a transverse-direction length and a longitudinal-direction length of a key region displayed on the image display device;
FIGS. 7A to FIGS. 7C are diagrams for describing the flowchart in FIG. 6 according to the embodiment of the present invention;
FIG. 8 is an exemplary flowchart for describing the method of operating the image display device, which is for displaying a change in the moving speed of the pointer on the key region displayed on the image display device; and
FIG. 9 is a screen diagram illustrating a user interface for setting the moving speed of the pointer displayed on the image display device according to the embodiment of the present invention.

### DETAILED DESCRIPTION OF THE DISCLOSURE

Description will now be given in detail of the exemplary embodiments, with reference to the accompanying drawings. For the sake of brief description with reference to the drawings, the same or equivalent components will be provided with the same reference numbers, and description thereof will not be repeated.

Referring to the accompanying drawings, embodiments according to the present invention are described in detail below in order to provide all information necessary to teach one of ordinary skill in the art to practice the present invention. However, the present invention is not limited to the embodiments described here, but can be realized also as modifications, alterations, or even improvements. What is considered not to be related to the description of the embodiments is not illustrated in the drawing, and like constituent parts are given like reference characters throughout the specification for the purpose of providing the clear description.

An image display device referred to in the present specification includes an apparatus that receives and displays radio broadcasts, an apparatus that records and reproduces a moving image, an apparatus that records and reproduces audio signals.

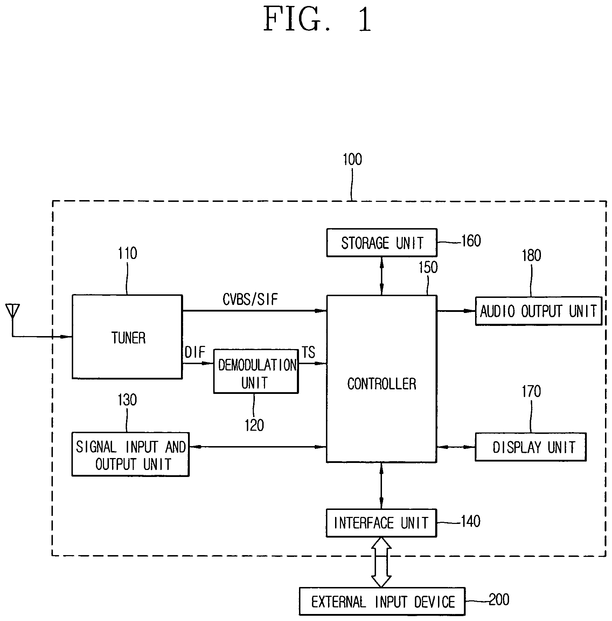

FIG. 1 is a block diagram illustrating an image display device 100 according to the present invention and an external input device 200. The image display device 100 includes a tuner 110, a demodulation unit 120, a signal input and an output unit 130, an interface unit 140, a controller 150, a storage unit 160, a display unit 170 and an audio output unit 180. The external input device 200 is an apparatus that is separated from the image display device 100, but may be included as one constituent element of the image display device 100.

Referring to FIG. 1, the tuner 110 selects a broadcast signal corresponding to a channel selected by the user, from radio frequency (RF) broadcast signals received through an antenna, and converts the selected broadcast signal into an intermediate frequency signal or a baseband video and voice signal. For example, if the RF broadcast signal is a digital broadcast signal, the tuner 110 converts the RF broadcast signal into a digital IF signal DIF. In contrast, if the RF broadcast signal is an analog broadcast signal, the tuner 110 converts the RF broadcast signal into a baseband video and voice signal CVBS/SIF. In this manner, the tuner 110 is a hybrid tuner that processes the digital broadcast signal and the analog broadcast signal.

A digital IF signal DIF, output from the tuner 110, is input into the demodulation unit 120, and the analog baseband video and voice signal CVBS/SIF, output from the tuner 110, is input into the controller 250.

The tuner 120 receives a single carrier RF broadcast signal according to the Advanced Television Systems Committee (ATSC) standards or a multiple-carrier RF broadcast signal according to the Digital Video Broadcasting (DVB) standards.

Although one tuner 110 is illustrated in the drawings, the image display device 100 is not limited to the one tuner and may include the multiple tuners, for example, first and second tuners. In this case, the first tuner receives a first RF broadcast signal corresponding to the broadcast channel selected by the user, and the second tuner receives a second RF broadcast signal corresponding to the already-stored broadcast channel, sequentially or periodically. The second tuner converts the RF broadcast signal into the digital IF signal DIF, or the analog baseband video and voice signal CVBS/SIF, in the same manner as the first tuner.

The demodulation unit 120 receives the digital IF signal DIF that results from the conversion and performs a demodulation operation.

If the digital IF signal DIF, output from the tuner 110, is in the ATSC format, the demodulation unit 120 performs 8-vestigial side band (8-VSB) modulation. The 8-vestigal side band (8-VSB) demodulation results from vestigial side band modulation, which is single carrier amplitude modulation using the National Television System Committee (NTSC) frequency bandwidth. At this time, the demodulation unit 120 performs channel decoding, such as Trellis decoding, de-interleaving, and Reed-Solomon decoding. To that end, the demodulation unit 120 includes a Trellis decoder, a de-interleaver, a Reed-Solomon decoder, and the like.

When the digital IF signal DIF, output from the tuner 110, is in the DVB format, the demodulation unit 120 performs Coded Orthogonal Frequency Division Modulation (COFDMA) modulation. At this time, the demodulation unit 120 performs channel decoding, such as convolution decoding, the de-interleaving, and the Reed-Solomon decoding. To do this, the demodulation unit 120 includes a convolution decoder, the de-interleaver, and the Reed-Solomon decoder.

In this manner, the demodulation unit 120 outputs a stream signal TS after performing the demodulation and the channel decoding. At this time, the stream signal results from multiplexing a video signal, a voice signal, or a data signal. For example, the stream signal TS is an MPEG-2 Transport Stream (TS) that results from multiplexing an MPEG-2 standard video signal, a Dolby AC-3 standard voice signal, and the like. Here, the MPEG-2 TS includes a 4 byte header and a 184 byte payload.

In this manner, the signal, output from the demodulation unit 120 is input into the controller 170 and goes through inverse multiplexing and video/voice signal processing.

The signal input and output unit 130 is by a cable or wirelessly connected to an external apparatus, for example, a digital versatile disk (DVD) player, a Bluray disk player, a game apparatus, a camera, a videotape recorder, a notebook computer, a set-top box, a portable device, a smart phone and the like, and performs signal input and output operations. To do this, the signal input and output unit 130 includes an A/V input and output unit for connection to a cable network and a wireless communication unit for connection to a wireless network.

The A/V input and output unit includes an Ethernet port, a USB port, a Composite Video Banking Sync (CVBS) port, a composite port, an S-video port (analog), a Digital Visual Interface (DVI) port, a High Definition Multimedia Interface (HDMI) port, a Mobile High-definition Link (MHL) port, a RGB port, a D-SUB port, an IEEE 1394 port, a SPDIF port, a Liquid HD port, and the like. A digital signal, input through these, is transferred to the controller 150. At this time, an analog signal, input through the CVBS port and the S-VIDEO port, is converted into the digital signal by an analog-to-digital converter (not illustrated) and is transferred to the controller 150.

The wireless communication unit performs wireless Internet access. The wireless communication unit performs wireless Internet access by using wireless communication technologies, such as Wireless LAN (WLAN) (Wi-Fi), Wireless Broadband (Wibro), World Interoperability for Microwave Access (Wimax), and High Speed Downlink Packet Access (HSPPA). In addition, the wireless communication unit can perform short-range communication with a different electronic apparatus. For example, the wireless communication unit performs the short-range communication by using a short-range communication technology, such as Bluetooth, Radio Frequency Identification (RFID), Infrared Data Association (IrDA), Ultra Wideband (UWB), or ZigBee.

The signal input and output unit 130 connects to a predetermined web page over the wireless and cable networks and thus transmits the data to and from the server and additionally receives content or various items of data, for example, the content, such as movies, an advertisement, a game, VOD, and broadcast signals and various items of content-related information, which are provided by a content service provider or a network administer. The signal input and output unit 130 receives firmware update information and update files provided by the network administrator over the cable and wireless networks and receives an application selected by the user among application that are placed in a public domain.

The signal input and output unit 130 transfers an image signal, a voice signal, and the data signal that are provided by the external apparatus, to the controller 150. In addition, the signal input and output unit 130 transfers the image signal, the voice signal, and the data signal included in various media files stored in an external storage device, such as a memory device and a hard disk driver, to the controller 150. In addition, the signal input and output unit 130 transfers the image signal, the voice signal, and the data signal that are processed by the controller 150, to the external apparatus described above, or the different external apparatus.

For example, the signal input and output unit 130 is connected to the set-top box, for example, a set-top box for Internet Protocol TV (IPTV), through at least one of the ports described above, and performs the signal input and output operation. In addition, the signal input and output unit 130 transfers the image signal, the voice signal, and the data signal, which are processed by the set-up box for the IPTV in such a manner the image signal, the voice signal, and the data signal are available for bidirectional communication, to the controller 150, and transfers the signals processed by the controller 150 back to the set-up box for the IPTV. The IPTV here includes ADSL-TV, VDSL-TV, and FTTH-TV that are different depending on a transmission network. The IPTV includes TV over DSL, Video over DSL, TV over IP(TVIP), Broadband TV (BTV) and the like. In addition, the IPTV includes Internet TV and full browsing TV in which Internet connection is possible.

The digital signal, output from the signal input and output unit 130, also includes the stream signal TS. The stream signal TS, described above, is a signal that results from multiplexing the image signal, the voice signal, and the data signal.

The interface unit 140 transfers the signal, input by the user, to the controller 150, or transfers the signal transferred from the controller 150, to the user.

The interface unit 140 transfers a user input signal, input into a power key, a channel key, a volume key, a setting key and the like, to the controller 150. In addition, the interface unit 140 includes a sensing unit (not illustrated) for sensing a user gesture, a user location, a touch, and the like. To that end, the sensing unit includes a touch sensor, a voice sensor, a location sensor, a motion sensor, a gyro sensor, and the like. In such a case, the interface unit 140 transfers an input signal, input from the sensing unit, to the controller 150, or transmits the signal coming from the controller 150 to the sensing unit.

The interface unit 140 receives an input signal that the user inputs with the external input device 200, for example, the spatial remote controller, to perform power source control, channel selection, screen setting and the like, or transmits the signal processed by the controller 160 to the external input device 200. At this time, the interface unit 140 and the external input device 200 are connected to each other, by a cable or wirelessly.

In addition, the interface unit 140 receives personal information from the external input device 200 and/or receives information on a web server in connection by using the personal information. For example, if the mobile terminal approaches the external input device 200 within a predetermined distance and performs near field communication (NFC), the external input device 200 receives the personal information and others stored in the mobile terminal. The personal information here is information that is necessary to log on with a predetermined account before making a connection to the electronic apparatus or using the service.

The controller 150 controls general operation of the image display device 100. Specifically, the controller 150 generates or outputs a signal for the image or voice output by inversely multiplexing the stream signal TS that is received through the tuner 110, the demodulation unit 120, and/or the signal input and output unit 130 or by processing the inversely-multiplexed signals. For example, the controller 150 controls the tuner 110 in such a manner that the RF broadcast signal corresponding to the channel selected by the user or the already-stored channel is tuned.

The image signal image-processed by the controller 150 is transferred to the display unit 170 and an image corresponding to a resolution image signal is output. The voice signal processed by the controller 150 is transferred to the audio output unit 180 to output a sound. In addition, the image signal and/or the voice signal, which is processed by the controller 150, is input into an output device of the external apparatus through the signal input and output unit 130.

Although not illustrated in the drawings, the controller 150 includes, for example, an inverse multiplexing unit, an image processing unit, an On Screen Display (OSD) generation unit and a voice processing unit, a data processing unit, a channel browsing processing unit and others in order to generate or output the signal for the image or sound output by inversely multiplexing the stream signal TS or by processing the inversely-multiplexed signals.

The inverse multiplexing unit (not illustrated) inversely multiplexes the stream signal TS that is input. For example, if the MPEG-2 stream signal TS is input, the inverse multiplexing unit inversely multiplexes the MPEG-2 stream signal TS into the image signal, the voice signal, and the data signal. The stream signal TS here, as described above, is an output from the tuner 110, the demodulation unit 120, and/or the signal input and output unit 130.

The imaging processing unit (not illustrated) performs image processing, for example, decoding, on the inversely-multiplexed image signal. More specifically, the image processing unit decodes an MPEG-2 standard-encoded image signal by using an MPEG-2 decoder, and decodes an H.264 standard-encoded image signal according to Digital Multimedia Broadcasting (DMB) standard or Digital Video Broadcast-Handheld (DVB-H) standards by using an H.264 decoder. In addition, the image processing unit performs the imaging processing in such a manner that brightness, tint and color of the image signal are adjusted. In addition, the image processing unit performs scaling in such a manner that the inversely-multiplexed image signal can be output on the display unit 170. In this manner, the image signal, which is image-processed by the image processing unit, is transferred to the display unit 170 or transferred to an external output apparatus (not illustrated) through an external output port.

The OSD generation unit (not illustrated) generates an OSD signal depending on a user input or by itself. More specifically, the OSD generation unit generates a signal for displaying various items of information in the form of a graphic or a text on the screen of the display unit 170, for example, based on at least one of the image signal and the data signal or an input signal that is received from the external input device 200. The generated OSD signal includes various data, such as a user interface, various menu screens, a widget, and an icon that are provided on the image display device 100 and a pointer corresponding to a pointing signal that is transmitted from the external input device 200. In addition, the generated OSD signal includes a 2D object or a 3D object.

The controller 150 mixes the OSD signal that is generated by the OSD generation unit described above and the image signal that is image-processed and decoded by the image processing unit. The mixed image signal goes through a frame rate converter (FRC) to change its image frame rate. In addition, the mixed image signal goes through a formatter and is output with its image signal format being changed, or is separated into a 2D image signal and a 3D image signal for 3D image display or is converted from the 2D image signal into the 3D image signal.

The voice processing unit (not illustrated) performs, voice processing, for example, decoding, on the inversely multiplexed voice signal. More specifically, the voice processing unit decodes the MPEG-2 standard-encoded voice signal by using the MPEG-2 decoder, decodes an MPEG 4 Bit Sliced Arithmetic Coding (BSAC) standard-encoded voice signal according to the DMB standards by using an MPEG 4 decoder, and decodes an MPEG 2 advanced audio coded (AAC) standard-encoded voice signal according to satellite DMB standards or the Digital Video Broadcast-Handheld (DVB-H) standards by using an AAC decoder. In addition, the voice processing unit performs base processing, treble processing, and sound volume processing. The voice signal that is processed by the voice processing unit in this manner is transferred to the audio output unit 180, for example, a speaker, or is transferred to an external out device.

The data processing unit (not illustrated) performs data processing, for example, decoding, on the inversely multiplexed voice signal. The data signal here includes electronic program guide (EPG) information including broadcast information, such as a broadcasting-starting time and a broadcasting-ending time of a broadcast program that is broadcast over each channel. The EPG information includes, for example, ATSC-program and System Information Protocol (ATSC-PSIP) in the case of ATSC standards and includes DVB-Service Information (DVB-SI) in the case of DVB. The ATSC-PSIP or the DVB-SI here is included in a header (4 byte) of the MPEG-2 stream signal TS.

The channel browsing processing unit (not illustrated) receives the stream signal TS, output from the demodulation unit 120, or the stream signal, output from the signal input and output TS unit 130, as an input, and extracts an image from it, thereby generating a thumbnail image. The generated thumbnail image, as it is, or as is encoded, is input into the controller 150. In such a case, the controller 150 displays a thumbnail list including the multiple thumbnail images on the display unit 170 by using the thumbnail image that is input. At this time, the thumbnail images in the thumbnail list are displayed on all the regions of the display unit 170, or are displayed one region of the display unit 270 in a manner that enables the thumbnail images to be easily viewable. In addition, the thumbnail images in the thumbnail list are sequentially updated.

On the other hand, the controller 150 performs signal processing on the analog baseband image/voice CVBS/SIF as well. For example, the analog baseband image and voice signal CVBS/SIF, input into the controller 150, is the analog baseband image and voice signal, output from the tuner 110 or the signal input and output unit 130. The controller 150 performs the control, in such a manner that the analog baseband image and voice signal CVBS/SIF that is input is processed, the signal-processed image signal is displayed on the display unit 170, and the signal-processed voice signal is output to the audio output unit 180.

In addition, the controller 150 controls operation of the image display device 100 with a user command, input through the signal input and output unit 130 or the interface unit 140, or with an internal program. More specifically, the controller 150 determines whether or not the external apparatus is connected, depending on the input of the personal information from the external input device 200, based on information on the adjacent external apparatus around the image display device 100, which is received from the signal input and an output unit 130 or the interface unit 140, and based on information on a channel over, a frequency at, and a code through which the different external apparatus can be remotely controlled, Then, the controller 250 displays an object indicating the external apparatus being connected, on the display unit 270.

In addition, the controller 150 displays at least one object that is to be displayed on the display unit 170, as a 3D object. For example, in addition to a Web screen (a newspaper, a magazine, and the like) in connection and an electronic program guide (EPG), the object here includes at least one of a menu of various items, a widget, an icon, a still image, a moving image, and a text.

In addition, the controller 150 detects a user gesture by analyzing individually or combinedly an image that is captured by an imaging device (not illustrated), a signal that is detected by a sensing unit (not illustrated), and an input signal that is transmitted by the external input device 200.

In addition, the controller 150 identifies a location of the user, based on the images captured by the imaging unit (not illustrated). For example, the controller 250 measures a distance (an X-axis coordinate) between the user and the image display device 100, and additionally measures an X-axis coordinate and a Y-axis coordinate within the display unit 170, which correspond to the location of the user.

The storage unit 160 stores a program for the signal processing and the control by the controller 150, and stores information on a predetermined broadcast channel through the use of the signal-processed image signal, the voice signal and the data signal, and a channel memory function such as generating a channel map writing. The storage unit 160 includes at least one of the following storage media: a flash memory, a hard disk, a multimedia card micro type, a card type memory (for example, an SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

In addition, the storage unit 160 stores IR format key codes for controlling different external apparatuses, and stores IR format key database for multiple external apparatuses.

The image signal, the data signal, and the OSD signal that are processed by the controller 150, or the image signal, the data signal, and a control signal and others that are received from the signal input and output unit 130 or the interface unit 140 are converted into a RGB signal, and a drive signal is generated. Through this process, the resulting image is output to the display unit 170. The display unit 170 is realized in various forms as follows: a plasma display panel (PDP), a liquid crystal display (LCD), a thin film transistor-liquid crystal display (TFT-LCD), an organic light emitting diode (OLED), a flexible display, a 3D display, and an e-ink display.

For example, if the display unit 170 is a 3D display, this is realized as an add-on display type or as a sole display type that enables 3D image viewing. The sole display type is for the display unit 170 to solely realize a 3D image without a separate display, for example, without using eyeglasses. For example, the sole display type is categorized into a lenticular type and a parallax barrier type. In addition, the add-on display type is for the display unit 170 to realize the 3D image by using a 3D viewing device. For example, the add-on display type is categorized into a head-mounted display (HMD) type and an eyeglasses type.

In addition, if the display unit 170 is realized as being equipped with a touch screen-equipped touch screen, the display unit 170 functions as the input device as well as the output device.

The touch sensor is configured in such a manner as to convert a pressure applied to a specific portion of the display unit 170, a change in electrostatic capacitance occurring in a specific portion of the display unit 170, or the like into an electrical signal. The touch sensor is configured in such a manner as to detect the pressure that is applied to the touch sensor at the time of the touch, as well as a position and an area of the touch sensor that a touching object touches on. The touching object here is an object that applies the touch to the touch sensor, and includes for example, a finger, a touch pen or a stylus, a pointer and the like. If the touch input is applied to the touch sensor, a signal(s) corresponding to the touch input is sent to a touch controller. After processing the signal(s), the touch controller transmits the corresponding data to the controller 150. Accordingly, the controller 150 identifies which region of the display unit 170 is touched on.

The audio output unit 180 receives the voice signal processed by the controller 150, for example, a stereo signal or a 5.1 channel signal, as an input, and outputs a sound corresponding to the processed voice signal. To do this, the audio output unit 180 is realized as various types of speakers.

The image display device 100 includes the imaging unit (not illustrated) for photographing the user. The imaging unit is realized as one camera, but is not limited to one camera. The imaging unit can be realized to include the multiple cameras. Information on the image captured by the imaging unit is input into the controller 150, and the controller 150 accordingly detects the user gesture, based the captured image.

In addition, the image display device 100 includes an image communication unit (not illustrated) that is configured to include a microphone (not illustrated) in addition to the imaging unit (not illustrated). The controller 150 signal-processes the information on the image captured by the imaging unit and information collected by the microphone and transmits the result of the signal processing to an image communication apparatus of the other party through the signal input and output unit 130 or the interface unit 140.

A power supply unit (not illustrated) supplies electric power throughout the image display device 100. Specifically, the power supply unit supplies electric power to the controller 150 realized in the System-On-Chip (SOC) form, the display unit 170 for displaying the image, and the audio output unit 180 for outputting audio.

To do this, the power supply unit (not illustrated) includes a converter (not illustrated) that converts DC power into AC power. On the other hand, for example, if the display unit 170 is realizes as a liquid crystal panel including multiple backlight lamps, the power supply unit further includes an inverter (not illustrated) in which a PWM operation is possible for brightness variability and dimming drive.

The external input device 200 is connected to the interface unit 140 by a cable or wirelessly and transmits the input signal that is generated according to the user input, to the interface unit 140. The external input device 200 includes a remote controller (for example, the spatial remote controller), a mouse, a keyboard, a wheel, and the like. The remote controller transmits the input signal to the interface unit 140 by using the communication technology such as Bluetooth, RF, Infrared Data Association (IrDA), Ultra Wideband (UWB), or ZigBee. If the external input device 200 is realized, specifically, as the spatial remote controller, the external input device 300 generates the input signal by detecting a movement of the main body.

On the other hand, the image display device 100 is realized as a fixed-type digital broadcast receiver or a mobile digital broadcast receiver.

If the image display device 100 is realized as the fixed type digital broadcast receiver, the image display device 100 is realized in such a manner as to receive at least one of the following broadcast types: digital broadcast to which to apply an ATSC type (8-VSB type) that uses a single carrier, digital broadcast to which to apply a ground wave DVB-T type (COFDM type) that uses multiple carriers, and digital broadcast in which to apply an ISDB-T type (BST-OFDM type) digital broadcast that allows for the use of different broadcast channel depending on a user authority.

If the image display device 100 is realized as the mobile digital broadcast receiver, the image display device 100 is realized in such a manner as to receive at least one of the following broadcast types: digital broadcast to which to apply a ground wave DMB type, digital broadcast to which to apply a satellite DMB type, digital broadcast to which to apply an ATSC-M/H type, digital broadcast to which to apply a Digital Video Broadcast-Handheld (DVB-H) type, and digital broadcast to which to apply a Media Forward Link-Only type.

On the other hand, the image display device 100 is realized as the digital broadcast receiver for cable communication, satellite communication or IPTV.

In addition, the image display apparatus 100 described above is applied to the mobile terminal as well. The mobile terminal includes a mobile phone, a smart phone, a laptop computer, a digital-broadcast-dedicated terminal, a personal digital assistant (PDA), a portable multimedia player (PMP), a navigation system, a slate PC, a tablet PC, a high-end subnotebook and the like.

The image display device, when used as the mobile terminal, further includes the wireless communication unit in addition to the configuration described above. The wireless communication unit enables wireless communication between the mobile terminal and a wireless communication system or between the mobile terminal and a network within which the mobile terminal is located.

To this end, the wireless communication unit includes at least one of a broadcast receiving module, a mobile communication module, a wireless Internet module, a short-range communication module and a positional information module.

The broadcast receiving module receives a broadcast signal and/or broadcast related information from a broadcast administrative server over a broadcast channel.

The broadcast channel here includes a satellite channel, a ground wave channel and the like. In addition, the broadcast administrative server means a server that generates and transmits the broadcast signal and/or the broadcast-related information or a server that receives the generated broadcast signal and/or the generated broadcast-related information and transmits them to the mobile terminal. The broadcast signal here includes not only a TV broadcast signal, a radio broadcast signal, and a data broadcast signal, but also a broadcast signal in the form of a combination of the TV broadcast signal or the radio broadcast signal and the data signal.

The broadcast-related information means broadcast-channel-related information, a broadcast program or a broadcast service provider. The broadcast-related information is provided over a mobile communication network. In addition, the broadcast-related information comes in various forms. For example, the broadcast-related information comes in the form of an electronic program guide in Digital Multimedia Broadcasting (DMB), or an electronic service guide in Digital Video Broadcast-Handheld (DVB-H).

The broadcast receiving module receives the digital broadcast signal by using the following TV standards: Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Convergence of Broadcasting and Mobile Service (DVB-CBMS), Open Mobile Alliance-BroadCAST (OMA-BCAST), China Multimedia Mobile Broadcasting (CMMB), Mobile Broadcasting Business Management system (MBBMS), and Integrated Services Digital Broadcast-Terrestrial (ISDB-T). Of course, the broadcast receiving module is configured in such a manner that it is suitable not only for a digital broadcasting system described above, but also for other broadcasting systems.

The broadcast signal and/or the broadcast-related information that are received through the broadcast receiving module are stored in the memory.

The mobile communication module transmits a wireless signal to and from at least one of a base station an external terminal, and a server over a mobile communication network. The wireless signal includes a voice call signal, a video telephone call signal or various forms of data involved in the transmitting and receiving of a text/multimedia message.

The mobile communication module is configured to realize a videotelephony mode and a voice telephony mode. The videotelephony mode refers to a mode in which the user is engaged in a voice conversation with real-time viewing of the other party's image being enabled, and the voice telephony mode refers to a mode in which the user is engaged in the voice conversation with the real-time viewing of the other party's image being disabled.

The mobile communication module is configured to transmit and receive at least one of voice and video to realize the videotelephony mode and the voice telephony mode. The wireless Internet module is a module for wireless Internet access and is built into or provided independently of the mobile terminal. To provide the wireless Internet access, Wireless Internet technologies are used such as Wireless LAN (WLAN), Wireless Fidelity (WiFi) Direct, (Digital Living Network Alliance (DLNA), Wireless broadband (Wibro), World Interoperability for Microwave Access (Wimax), High Speed Downlink Packet Access (HSDPA), GSM, CDMA, WCDMA, and Long Term Evolution (LTE).

The short-range communication module refers to a module for short-range communication. To provide the short-range communication, short-range communication network technologies are used such as Bluetooth, Radio Frequency Identification (REID), Infrared Data Association (IrDA), Ultra Wideband (UWB), ZigBee, Near Field Communication (NFC), and WiFi Direct.

The positional information module is a module for obtaining a location of the mobile terminal and its typical example is a Global Position System (GPS) module or a WiFi(Wireless Fidelity (WiFi) module.

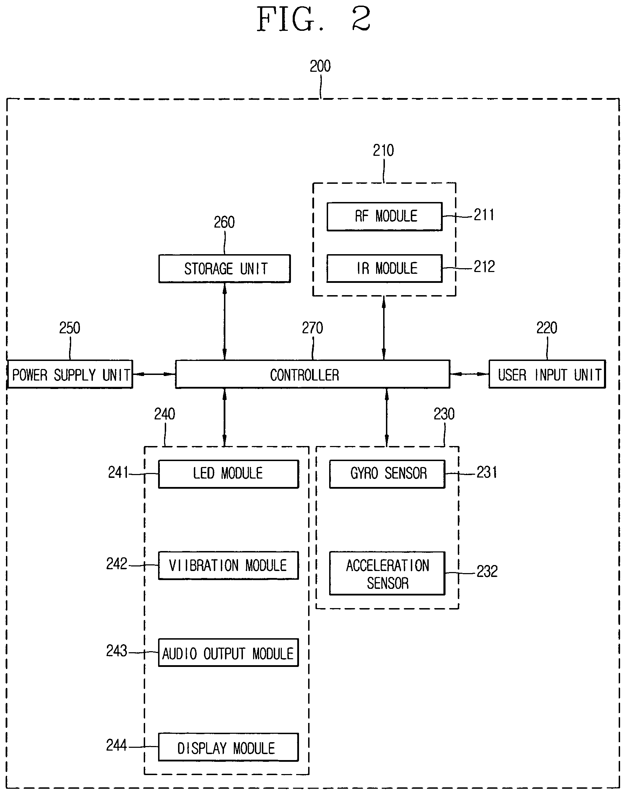

FIG. 2 is a block diagram illustrating in detail the external input device 200 in FIG.1. The external input device 200 is configured to include a wireless communication unit 210, a user input unit 220, a sensing unit 230, an output unit 240, a power supply unit 250, a storage unit 260 and a controller 270.

Referring to FIG. 2, the wireless communication unit 210 transmits a signal to and from the image display device 100. To that end, the wireless communication unit 210 includes an RF module 211 and the IR module 212. The RF module 211 transmits the signal transmit to and from the interface unit 140 of the image display device 100 according to RF communication standards. The IR module 212 transmits the signal to and from the interface unit 140 of the image display device 100 according to IR communication standards. For example, the wireless communication unit 210 transmits a signal including information on a movement of the external input device 200 to the image display device 100 through the RF module 211.

On the other hand, the external input device 200 further includes an NFC module (not illustrated) for a short-range magnetic field communication with the predetermined external apparatus. Through the short-range magnetic field communication with the external apparatus, the external input device 200 receives personal information and information on a Web server that is accessed with the personal information and transmits the received information to the image display device 100 through the RF module 211 or the IR module 212.

In addition, the external input device 200 transmits the signal to the interface unit 140 of the image display device 100 by using the communication technology such as Bluetooth, Infrared Data Association (IrDA), Ultra Wideband (UWB), ZigBee), and short-range magnetic field communication (NFC).

The external input device 200 receives the image, the voice, or the data signal that is output from the interface unit 140 of the image display device 100. Then, based on the image, the voice, or the data signal that is received, the external input device 200 displays it on the image display device 100 or outputs it as audio.

In addition, the external input device 200 receives from the adjacent external apparatus information on the different external apparatus and information on the channel over, the frequency at, and the code through which the different external apparatus can be remotely controlled. Based on such information on the different external apparatus, the external input device 200 assigns the channel, the frequency, or the code to the corresponding external apparatus and performs remote control.

The user input unit 220 includes an input unit such as a keypad, a key button, a touch screen, a scroll key, and a jog key. The user operates the user input unit 220 to input a control command associated with the image display device 100. The user inputs such a control command, for example, by pushing down the key button of the user input unit 220. In addition, for example, if the user input unit 220 is equipped with the touch screen, the user inputs the control command by touching on a soft key of the touch screen.

The user input unit 220 includes, for example, an okay key, a menu key, a direction control key, a channel tuning key, a volume adjustment key, a return key, and a home key. The okay key (not illustrated) is used to select a menu or an item. The menu key (not illustrated) is used to display a predetermined menu. The direction control key is used to move a pointer or an indicator displayed on the display unit 170 of the image display device 100, upward, downward, leftward, and rightward. In addition, the channel tuning key (not illustrated) is used to tuning in on a specific channel. The volume adjustment key (not illustrated) is used to adjust the volume in such a manner as to make it be down low or up high. In addition, the return key (not illustrated) is used to move back to the previous screen. The home key (not illustrated) is used to move to a home screen.

The okay key may be configured to additionally have a scrolling function. To that end, the okay key is configured in such a manner as to take the wheel key form. That is, the user can push on the okay key upward and downward or leftward and rightward to select the corresponding menu or item. Also, the user can rotate the wheel forward and backward to scroll through the screen output on the display unit 170 of the image display device 100 or switch it to the next list page. For example, if one region of a screen that has to be output in its entirety is actually output to the display unit 170, the user can scroll the wheel of the okay key to search for a different region of the screen that he/she wants. Thus, a region of the screen that has not been output to the display unit 170 is output to the display unit 170. In another example, if the list page is displayed on the display unit 170, the user can scroll the wheel of the okay key to display the page that precedes or follows the current page currently displayed on the display unit 170.

In addition, a separate key can be provided to perform the scrolling function that is separated from the okay key.

The sensing unit 230 includes a gyro sensor 231 and an acceleration sensor 232. The gyro sensor 231 senses a spatial movement of the external input device 200 in terms of an X-axis, a Y-axis, and a Z-axis. The acceleration sensor 232 senses a moving speed of the external input device 200.

In addition, the sensing unit 230 further includes a distance measurement sensor to sense a distance from the display unit 170.

The output unit 240 outputs information that depends on operation of the user input unit 220 and information corresponding to a transmission signal of the image display device 100. The user recognizes an operation state of the user input unit 220 or a control state of the image display device 100 through the output unit 240. The output unit 240 includes an LED module 241, a vibration module 242, an audio output module 243, and a display module 244. The LED module 241 emits light, the vibration module 242 generates vibration, an audio output module 243 outputs sound, and a display module 244 displays an image, in response to the operation of the user input unit 220 or a signal transmitted and received through the wireless communication unit 210.

The power supply unit 250 supplies electric power to various electronic elements of the external input device 200. If the external input device 200 is not moved for a predetermined time, the power supply unit 250 stops supplying the electric power to reduce power consumption. When a predetermined key is operated, the power supply unit 250 resumes the supplying of the electric power.

The storage unit 260 stores various programs, applications, and frequency bandwidth information that are associated with the control and the operation of the external input device 200. In addition, the storage unit 260 stores IR format key codes for controlling the different external apparatuses with an IR signal, and stores IR format key database for the multiple external apparatuses.

The controller 270 generally controls what is associated with the control of the external input device 200. The controller 270 transmits a signal corresponding to the operation of the predetermined key of the user input unit 220 to the image display device 100 through the wireless communication unit 210. In addition, the controller 270 transmits the signal corresponding to the movement of the external input device 200 that is sensed by the sensing unit 230 to the image display device 100 through the wireless communication unit 210. The image display device 100 calculates coordinates of the pointer corresponding to the movement of the external input device 200.

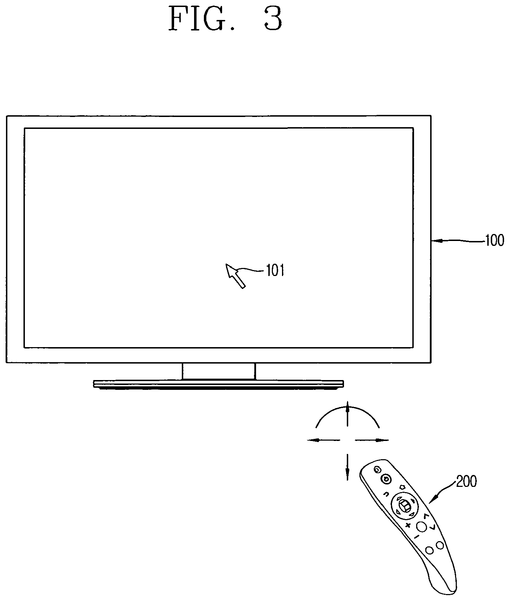

FIG. 3 is a diagram illustrating relative movements of the image display device 100 according to the present invention and the external input device 200. Here, for the sake of description, a TV set is taken as an example of the image display device 100 and the spatial remote controller is taken as an example of the external input device 200.

Referring to FIG. 3, the external input device 200 transmits the signal to and from the image display device 100 according to the RF communication standards. A control menu is displayed on the screen of the image display device 100 according to the control signal of the external input device 200. To that end, the external input device 200 includes multiple buttons and generates an external input signal according to the operation by the user of the button. In addition, the external input device 200 transmits information on a spatial 3D movement of the external input device 200, which is sensed by the sensing unit, to the image display device 100.

In FIG. 3, a pointer 101 corresponding to the movement of the external input device 200, is displayed on the screen of the image display device 100, in response to upward and downward, left and right, and back and forth movements by the user of the external input device 200 or the rotation by the user of the external input device 200. The external input device 200 is called the spatial remote controller because the corresponding pointer 101 is displayed on the image display device 100 while moving according to the spatial 3D movement.

The information on the external input device 200 that is sensed by the sensing unit of the external input device 200 is transmitted to the image display device 200. Then, the image display device 100 calculates x and y coordinates of the corresponding pointer from the information on the movement of the external input device 200. The pointer 101 corresponding to the calculated x and y coordinates is displayed on the image display device 100.

On the other hand, when the user moves the external input device 200 farther away from the screen of the image display device 100 while pushing down a predetermined button provided on the external input device 200, a selection region within the screen that corresponds to the pointer 101 displayed on the screen is displayed into a larger (smaller) size while being zoomed in (zoomed out). In contrast, when the user moves the external input device 200 closer to the screen of the image display device 100, the selection region within the screen that corresponds to the pointer 101 displayed on the screen is displayed into a smaller (larger) size while being zoomed out (zoomed in).

On the other hand, in a state where a predetermined button provided on the external input device 200 is pushed down, the upward/downward and leftward and rightward movements of the external input device 200 are not recognized. That is, if the external input device 200 is moved farther away from or closer to the screen of the image display device 100, the upward and downward and leftward and rightward movements are not recognized, but the forward and backward movements are recognized.

In addition, the moving speed and moving direction of the pointer 101 displayed on the image display device 100 and the scrolling speed of the screen according to the movement are determined depending on the moving speed and/or the moving direction of the external input device 200. Here, in addition to the form of an arrow illustrated in FIG. 3, the pointer 101 is configured from an object that has a form, such as a dot, a cursor, a prompt, a triangle and a polygonal.

At least one object through which a function is activated with a pointing signal is displayed on one region of the display unit 170 of the image display device 100 according to the embodiment of the present invention. The controller 150 receives the pointing signal from the external input device 200, for example, the spatial remote controller, through the interface unit 140. When a pointer that is displayed on the display unit 170 according to the pointing signal received in this manner is moved within a first region on which the object is not displayed, the controller 150 performs control in such a manner as to move the pointer at a first moving speed. In addition, when the pointer that is displayed on the display unit 170 according to the received pointing signal is moved within a second region on which the object is displayed, the controller 150 performs the control in such a manner as to move the pointer at a second moving speed lower than the first moving speed.

Accordingly, if the pointer enters the region on which the object is displayed when selecting the object (for example, a key) displayed on the image display device 100 with the pointing signal transmitted from the external input device 200, the moving speed of the pointer is made to be lower in order to prevent the pointer from easily moving out of the region on which the object is displayed. This provides an environment where the user can precisely perform the control that he/she wants to do (for example, a selection of the object).

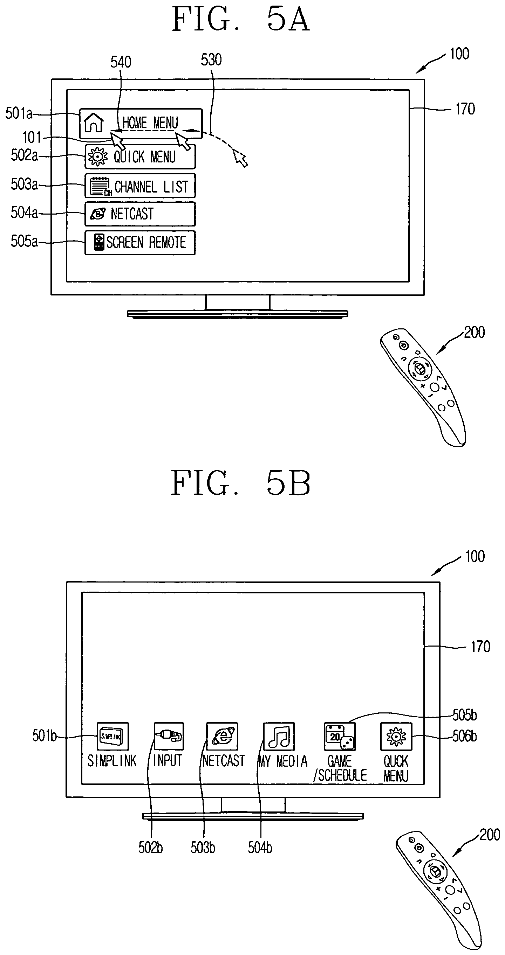

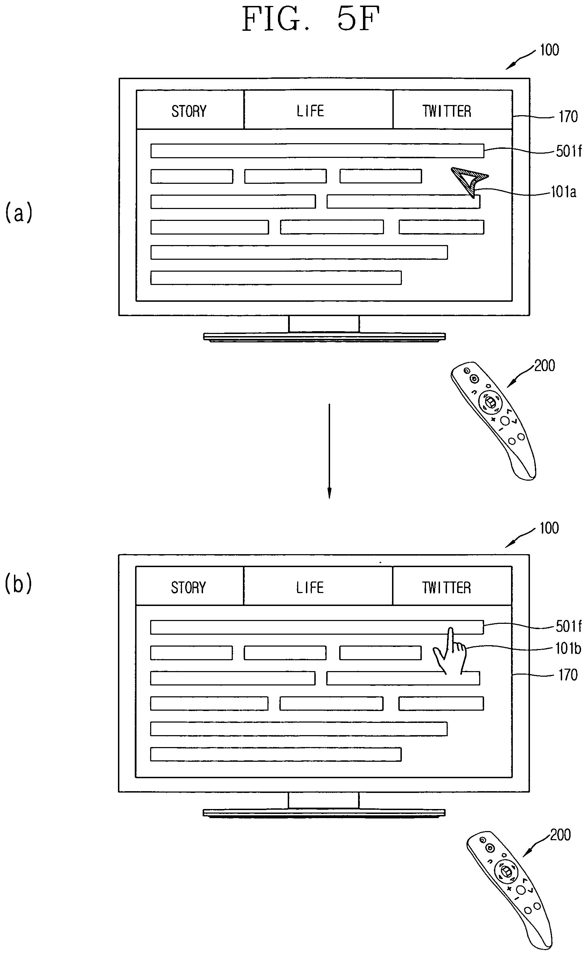

An operating method of changing the moving speed of the pointer displayed on the image display device according to the embodiment of the present invention is described in detail below referring to FIGS. 1 2, and 4 and FIGS. 5A and 5F.

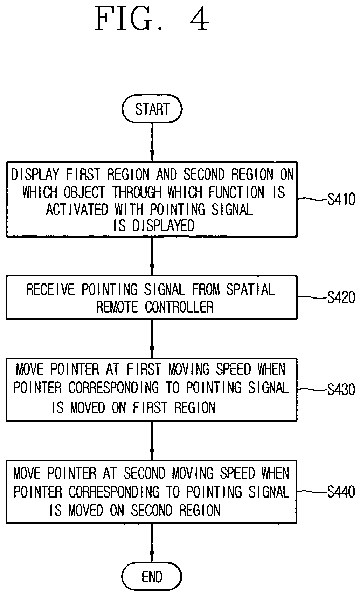

FIG. 4 is an exemplary flowchart for describing the method of operating the image display device according to the embodiment of the present invention. FIGS. 5A and 5F are diagrams for describing the flowchart in FIG. 4 according to the embodiment of the present invention.

Referring to FIG. 4, the first region and the second region are displayed on the display unit 170 of the image display device 100. At least one object through which the function is activated with the pointing signal transmitted from the external input device 200 is displayed on the second region (S410).

Here, on the display unit 170, the first region is a region that is present out of the region on which the object is displayed. The first region includes, for example, a background screen of the object, a broadcast screen, a moving image/audio reproduction screen and an application execution screen.

Here, on the display unit 170, the second region is a predetermined region on which the object is displayed. For example, the second region means an area of the object. In addition, the object displayed on the second region is one or more, and the second region displayed on the display unit 170 is one or more.

Here, the object through which the function is activated with the pointing signal means an object through which a predetermined function is executed with an input signal transmitted from the external input device 200 or an object through which screen switch is made.

Such an object includes, for example, a control key of the image display device 100, a smart menu, an icon for executing an application such as a web browser, a thumbnail image, and a user interface including a specific text or image. In addition, the object according to the embodiments of the present invention is limited to a predetermined size or smaller.

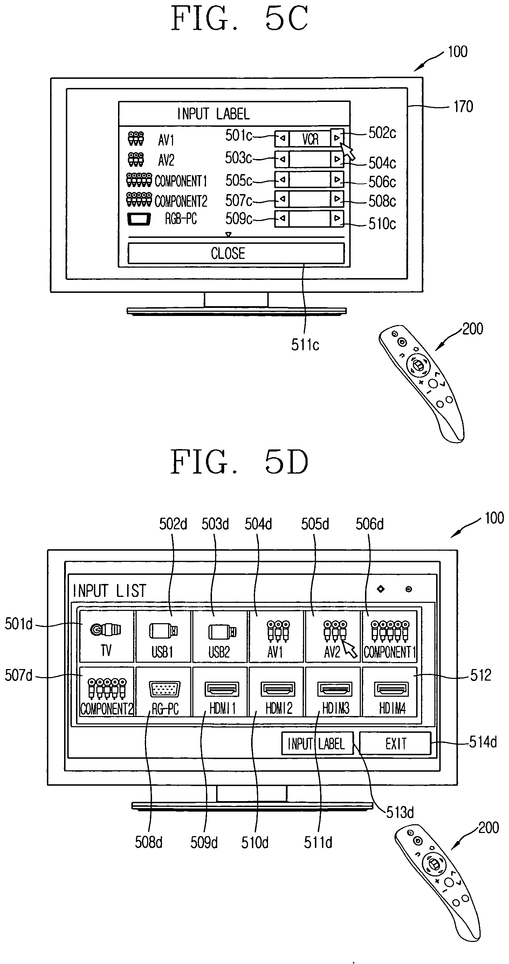

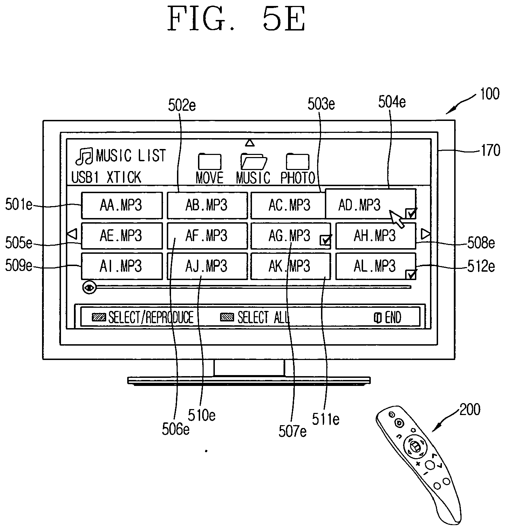

Specifically, referring to FIGS. 5A and 5B, for example, the object may be a menu key such as objects 501a to 505b illustrated in FIG. 5A, an application execution icon such as objects 501b to 506b illustrated in FIG. 5B, a moving key such as objects 501c to 511c illustrated in FIG. 5C, a control key for a connection to the external apparatus, such as objects 501d to 514d illustrated in FIG. 5D, a folder image including an executable file, such as objects 501e to 511e illustrated in FIG. 5E, and link information displayed on a predetermined web page, such as an object 501f illustrated in FIG. 5F.

On the other hand, if the pointer corresponding to the pointing signal is positioned on a predetermined region of the display unit 170, the controller 150 performs the control in such a manner that the object is output. That is, if the object that is not normally displayed on the display unit 170 is positioned on the predetermined region of the display unit 170, the controller 150 performs the control in such a manner that the object is output. At this time, if the pointer is positioned on the predetermined region, the second region is displayed on the display unit 170.

The image display device 100 receives the pointing signal from the external input device 200, for example, the spatial remote controller 200 (S420).

Here, the pointing signal means a value that is output as a result of sensing the movement through the gyro sensor 231 and the acceleration sensor 232 of the spatial remote controller 200. In addition, the pointing signal may mean a value of the input signal that is input through an input device, such as a touch pad, a trackball, and a track pad, provided in the spatial remote controller 200.

Here, the touch pad is an input device that moves the pointer according to a pressure that, when a user's finger or a pen comes into contact with a pad, is applied to the pad, or according to a movement of the user's finger or the pen along the pad. In addition, the trackball is an input device with which the user moves the pointer displayed on the display unit 170 of the image display device 100 or controls the icon displayed on the display unit 170 by rolling a ball provided in the spatial remote controller 200 with his/her hand. In addition, the track pad is an input device that moves the pointer displayed on the display unit 170, based on the movement sensed through the input by the finger, the pen or the like, or through static electricity.

In addition, the pointing signal is continuously transmitted while the spatial remote controller 200 is in an activated state. The pointing signal may be transmitted along with a predetermined selection signal.

The controller 150 calculates the coordinates corresponding to the pointing signal received from the spatial remote controller and displays the pointer on the display unit 170 according to the calculated coordinates. If the selection signal is received along with the pointing signal at this time, the controller 150 executes the associated function by selecting the region corresponding to the received selection signal or the information included in the corresponding region.

With relation to this, referring to FIG. 5E, if the selection signal is transmitted from the spatial remote controller 200 along with the pointing signal, the controller 150 displays a pointer 101 on the object 504e according to the pointing signal and executes a function corresponding to the object 504e that is selected according to the selection signal, such as playing an AD file. At this time, a check box is marked with "V" to indicate that the object 504e is selected.

If the pointing signal is received, and the pointer displayed according to the pointing signal received from the spatial remote controller is moved within the first region, the controller 150 performs the control in such a manner that the pointer is moved at the first moving speed (S430).

The controller 150 determines whether a location of the pointer displayed on the display unit 170 is included within the second region on which the object is displayed or is included within the first region that is present out of the second region and determines the moving speed of the pointer corresponding to the pointing signal.

Here, the first moving speed is a speed the corresponds to the pointing signal transmitted from the spatial remote controller 200 and an initial speed of the first moving speed is determined according to the user input or a predetermined value.

On the other hand, if the pointing signal is received, and the pointer displayed according to the pointing signal received from the spatial remote controller is moved within the second region, the controller 150 performs the control in such a manner that the pointer is moved at the second moving speed lower than the first moving speed (S440).

At this time, if the pointer is moved closer to the second region, the controller 150 outputs a highlighting effect in advance to the vicinity of the object or outputs the object in the pre-changed form (for example, an increase in size) in order to alert the user that a specific function can be activated.

In addition, if the pointer is moved closer to the second region, the controller 150 further outputs the information associated with the function executed through the object, for example, a function-preview thumbnail image and a pop-up window to the display unit 170.

Here, the second moving speed is a speed that is lower than the first moving speed corresponding to the pointing signal transmitted from the spatial remote controller 200. For example, the second moving speed is obtained by decreasing the determined first moving speed by a given amount of movement. At this time, the reduced amount of movement is set according to the user input, or a predetermined reference.

If the pointer is moved at the second moving speed in this manner, the pointer is less sensitive to the received pointing signal. That is, when the pointer is moved on the region on which the object associated with the movement control with respect to the image display device 100 is displayed, the controller 150 performs the control in such a manner that the moving speed is made to be lower, resulting in the pointer responding less sensitively to the pointing signal.

With relation to this, referring to FIG. 5A, the pointer 101 is displayed on the display unit 170 of the image display device 100, corresponding to the pointing signal received from the external input device 200. As illustrated in FIG. 5A, when moved on the first region, the pointer 101 displayed on the display unit 170 is moved at a first moving speed 530. However, when entering an object 501, for example, the second region on which "HOME MENU" is displayed, the pointer 101 is moved at a second moving speed 540 lower than a first moving speed 530. In this manner, the controller 150 performs the control in such a manner that the pointer 101 is moved at the lower speed on the region on which the object (or the user interface) for the movement control with respect to the image display device 100.

When this is done, the location of the pointer is prevented from being easily moved out of the region, on which the object is displayed, due to the negligible movement such as when the user waves or shakes his/her hand holding on the external input device 100.

On the other hand, the second moving speed according to the present invention is determined as described below, based on various references.

As one example, the controller 150 adjusts the second moving speed in proportion to at least one of an area of the object and an area of the second region on which the object is displayed.

With relation to this, referring to FIGS. 5A and 5F, if distances between the multiple objects 501a to 505b displayed on the second region are small as illustrated in FIG. 5A and if distances between the multiple objects 501b to 506b displayed on the second region are large as illustrated in FIG. 5B, the second moving speed is determined reflecting the extent to which the objects are separated from one another, along with areas of the objects. That is, the controller 150 detemines the second moving speed in such a manner that the pointer that is moved on the objects 501a to 505b illustrated in FIG. 5A is moved at a lower speed than the pointer that is moved on the objects 501b to 506b illustrated in FIG. 5B. Thus, the object that the user wants is selected with precision.

In addition, if areas of the multiple objects 501c to 510c displayed on the second region are small as illustrated in FIG. 5C, the second moving speed is determined as being lower, and if areas of the multiple objects 501d to 512d are large as illustrated in FIG. 5D, the second moving speed is determined as being relatively higher (but, even in this case, the second moving speed is lower that the first moving speed). Then, if the areas of the objects displayed on one screen of the display unit 170 are different as those of the objects 501c to 511c illustrated in FIG. 5C and those of the objects 501d to 514d illustrated in FIG. 5D, the moving speed may be determined in proportion to the area of each of the objects. For example, the controller 150 performs the control in such a manner that the pointer is moved at a very low speed on the objects 501c to 510c illustrated in FIG. 5C and is moved at a normally-low moving speed on the object 511c illustrated in FIG. 5C.

In addition, in another example, the controller 150 may determine the second moving speed depending on a usage pattern corresponding to the number of times that the spatial remote controller 200 trembles.

To that end, the controller 150 receives information on the number of times that the spatial remote controller 200 trembles and on the extent to which the spatial remote controller 200 trembles, from the spatial remote controller 200 for a predetermined time and analyzes the information to recognize the usage pattern. The recognized usage pattern is stored in the storage unit 160.

For example, the number of times that the spatial remote controller 200 trembles is greater in terms of the usage pattern, the second moving speed is determined as being lower, and the number of times that the spatial remote controller 200 trembles is small in terms of the usage pattern, the second moving speed is determined as being equal to or slightly less than the first moving speed. In addition, when the usage pattern indicating the number of times that the spatial remote controller 200 trembles and the extent to which the spatial remote controller 200 trembles is changed, the controller 150 stores the updated extent in the storage unit 160.

In addition" according to the embodiment of the present invention, an activation condition for changing the moving speed of the pointer on the region on which the object is displayed can be changed in advance.

In one example, the controller 150 performs the control in such a manner that the pointer is moved at the first moving speed as before for a predetermined time after the pointer enters the second region and when the predetermined time elapses, is moved at the second moving speed lower than the first moving speed. That is, the "predetermined time" is set in such a manner that it is subject to the activation condition, in order to move the object at the second moving speed on the region on which the object is displayed.

In another example, when the pointer is positioned on a border region between the first region and the second region, the controller 150 performs the control in such a manner that the pointer is moved at the first moving speed. When the pointer is moved out of the border region, the controller 150 performs the control in such a manner that the pointer is moved at the second moving speed lower than the first moving speed.

Here, the border region between the first region and the second region includes at least one part of the second region. That is, for example, the border region is a region that is formed along an outer edge of the object. That is, the activation condition that the pointer is moved "within a predetermined part of the second region is set in order to move the pointer at the second moving speed on the region on which the object is displayed.

As described above, the image display device 100 according to the present invention makes the moving speed of the pointer lower when the pointer corresponding to the pointing signal enters the key region displayed on the image display device. This provides a user convenience in that the user can precisely perform the control that he/she wants.

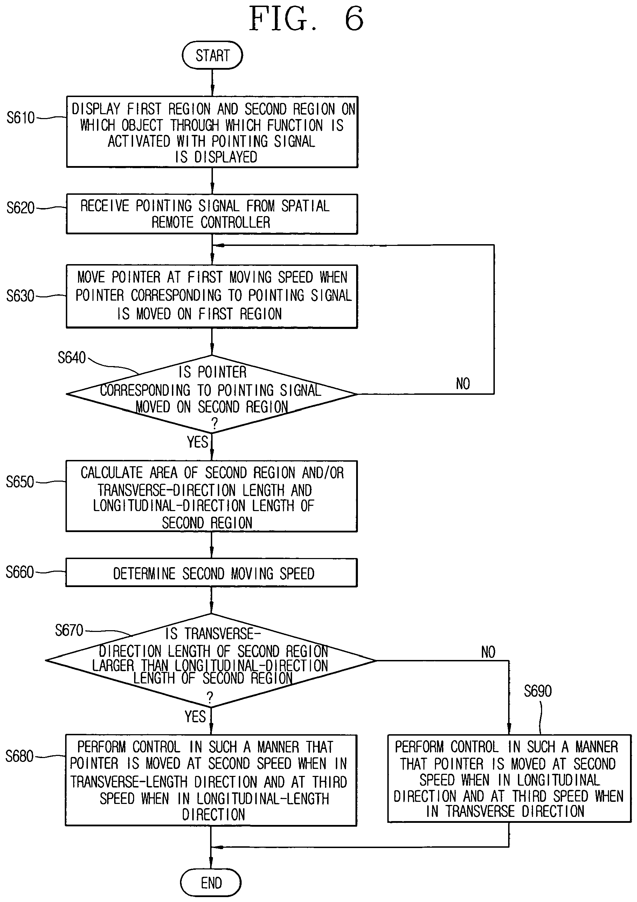

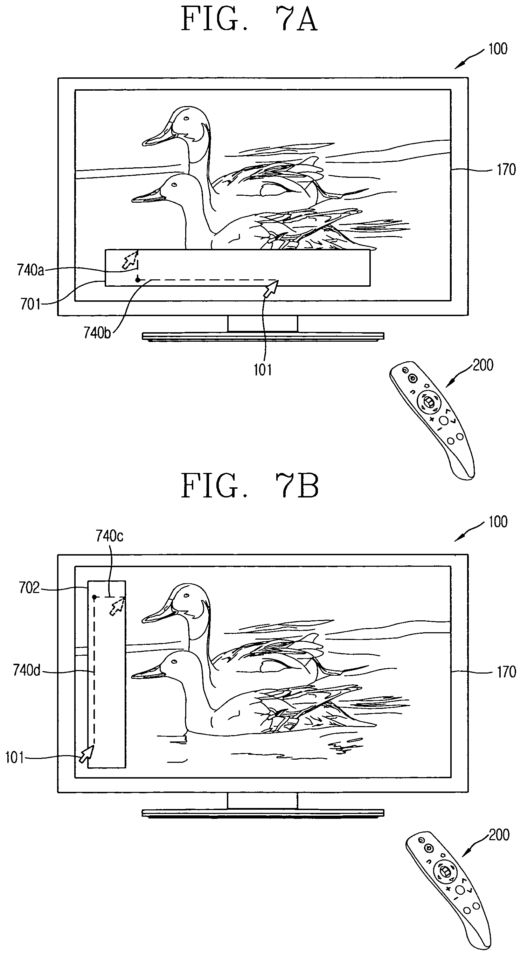

Referring to FIG. 6 and FIGS. 7A to 7C, a method of operating the image display device is described below in which the moving speed of the pointer is made to vary when the pointer is moved on one object in the transverse direction and when the pointer is moved on the one object in the longitudinal direction.

With relation to this, FIG. 6 is an exemplary flowchart for describing the method of operating the image display device, in which the moving speed of the pointer varies depending on the transverse-direction length and the longitudinal-direction length of the key region displayed on the image display device. FIGS. 7A to 7C are diagrams for describing the flowchart in FIG. 6 according to the embodiment of the present invention.

Referring to FIG. 6, first, the image display device 100 displays the first region and the second region on the display unit 170 and displays at least one object through which the function is activated with the pointing signal, on the second region (S610).

Here, on the display unit 170, the first region is a region that is present out of the region on which the object is displayed. The first region includes, for example, a background screen of the object, a broadcast screen, a moving image/audio reproduction screen and an application execution screen.

Here, the object through which the function is activated with the pointing signal means an object through which a predetermined function is executed with an input signal transmitted from the external input device 200 or an object through which screen switch is made.

Such an object includes, for example, a control key of the image display device 100, a smart menu, an icon for executing an application such as a web browser, a thumbnail image, and a user interface including a specific text or image. In addition, the object according to the embodiments of the present invention is limited to the predetermined size or smaller.

The image display device 100 receives the pointing signal from the external input device 200, for example, the spatial remote controller 200 (S620).

Here, the pointing signal means a value that is output as a result of sensing the movement through the gyro sensor 231 and the acceleration sensor 232 of the spatial remote controller 200. In addition, the pointing signal may mean the value of the input signal that is input through an input device, such as the touch pad, the trackball, and the track pad, provided in the spatial remote controller 200.

Here, the touch pad is an input device that moves the pointer according to a pressure that, when a user's finger or a pen comes into contact with a pad, is applied to the pad, or according to a movement of the user's finger or the pen along the pad. In addition, the trackball is an input device with which the user moves the pointer displayed on the display unit 170 of the image display device 100 or controls the icon displayed on the display unit 170 by rolling a ball provided in the spatial remote controller 200 with his/her hand. In addition, the track pad is the input device that moves the pointer displayed on the display unit 170, based on the movement sensed through the input by the finger, the pen or the like, or through the static electricity.

If the pointer displayed according to the pointing signal received from the spatial remote controller is moved within the first region, the controller 150 performs the control in such a manner that the pointer is moved at the first moving speed (S630).

On the other hand, when it is sensed that the pointer displayed according to the pointing signal received from the spatial remote controller is moved within the second region (S640), the controller 150 calculates the area of the object or of the second region and/or calculates the transverse-direction length and the longitudinal-direction length of the second region S(650).

If at this time, a size or form of the second region is changed as the pointer comes closer to the second region on which the object is displayed, the controller 150 calculates the area of the second region and/or the transverse-direction length and the longitudinal-direction length of the second region from the changed or form of the second region.

Depending on the result of the calculation, the controller 150 determines the second moving speed as the speed in proportion to the area of the second region or of the object or as the predetermined speed (lower than the first moving speed). Accordingly, the controller 150 performs the control in such a manner that when within the second region, the point is moved at the second moving speed as determined.

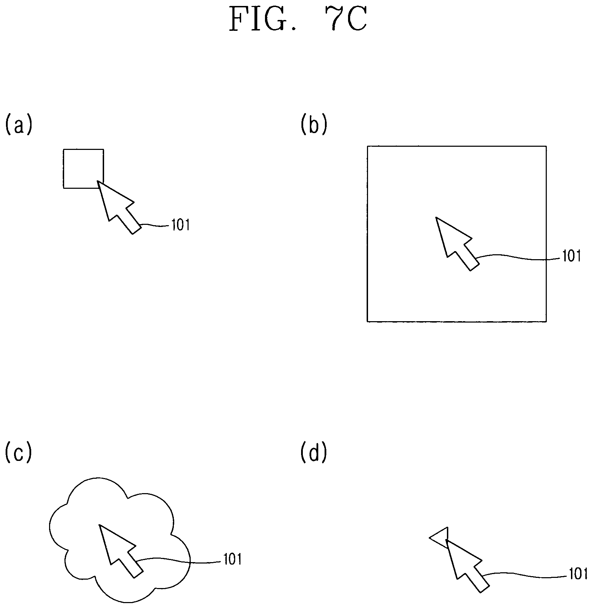

For example, referring to FIGS. 7C, because the object illustrated in FIG. 7C (a) is smaller in area or in width than the object illustrated in FIG. 7C (b), the controller 150 performs the control in such a manner that the pointer is moved at a lower speed on the object illustrated in FIG. 7C (a) than on the object illustrated in FIG. 7C (b). That is, the second moving speed on the object illustrated in FIG. 7C (a) is determined as being lower than the second moving speed on the object illustrated in FIG. 7C(b).

On the other hand, as illustrated in FIGS. 7C(c) and 7C(d), there are an object in the complicated form (for example, in the form of cloud) or an object that is smaller in form than the pointer 101. In this case, although the location of the pointer 101 is exactly on the object, the controller 150 performs the control in such a manner that the pointer 101 is moved at the second moving speed as predetermined. In addition, in this case, the controller 150 performs the control in such a manner that the pointer 101 is moved at a moving speed on the objects illustrated in FIGS. 7C (c) and (d), lower than the second speed as predetermined, or is "stopped" for a predetermined time. This provides the user with an opportunity to select the object.

After the calculation in Step 650, the controller 150 compares the transverse-direction length and the longitudinal-direction length of the object (S660). When the calculated transverse-direction length is greater than the calculated longitudinal-direction length as a result of the comparison, the controller 150 performs the control in such a manner that when the pointer is moved within the second region in the longitudinal direction, the pointer is moved at a third moving speed lower than the second moving speed.

With relation to this, referring to FIG. 7A, an object 701, which is small in the longitudinal-direction length and large in the transverse direction-length, is displayed on one region of the display unit 170. When the pointer 101 corresponding to the pointing signal from the spatial remote controller 200 is moved in the transverse direction on the object 701, the pointer 101 is set as being moved at a second moving speed 704b lower than a moving speed on the region that is present out of the object. When the pointer 101 is moved in the longitudinal direction on the object 701, the pointer 101 is set as being moved at a third moving speed 740a lower than the second moving speed. When this is done, if the length that the pointer can be moved is small, the pointer can be prevented from being easily moved out of the object due to the trebling hand and the like, by making the moving speed lower.

On the other hand, when the calculated longitudinal-direction length is larger than the calculated transverse-direction length as a result of the comparison in Step S660, the controller 150 performs the control in such a manner that when moved in the transverse direction within the second region, the pointer is moved at the third moving speed lower than the second moving speed.

With relation to this, referring to FIG. 7B, an object 702, which is large in the longitudinal-direction length and short in the transverse direction-length, is displayed on one region of the display unit 170. When the pointer 101 corresponding to the pointing signal from the spatial remote controller 200 is moved in the longitudinal direction on the object 702, the pointer 101 is set as being moved at a second moving speed 704d lower than a moving speed on the region that is present out of the object. When the pointer 101 is moved in the transverse direction on the object 702, the pointer 101 is set as being moved at a third moving speed 740d lower than the second moving speed.

As described above, the extent to which the moving speed of the pointer is changed varies depending on the size and the form of the key displayed on the image display device. This provides a user convenience in that the user is enabled to perform the exact control although the size of the key is very small or there is a big difference between the transverse-direction length and the longitudinal-direction length.

A method of operating the image display device is described below referring to FIGS. 1, 2 and 8. The method is for displaying an indication that the moving speed is changed when the pointer 101 is moved on the object.

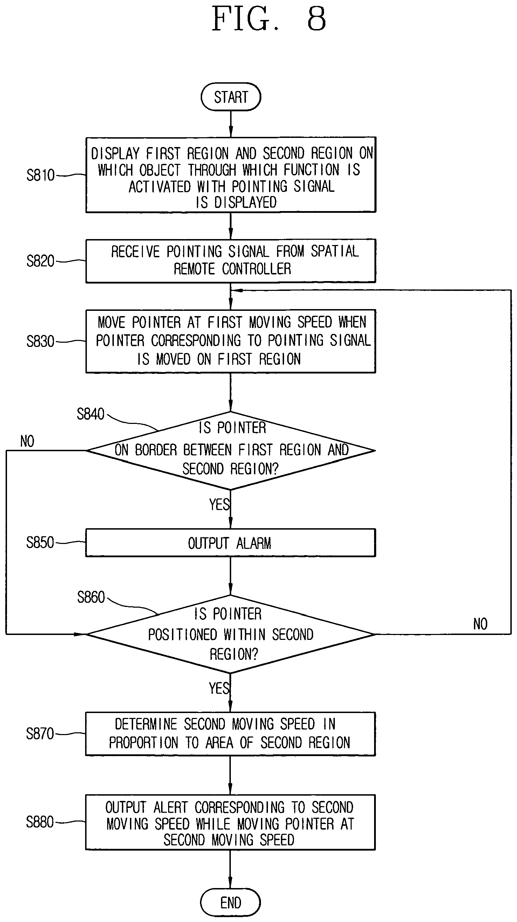

FIG. 8 is an exemplary flowchart for describing the method of operating the image display device, which is for displaying a change in the moving speed of the pointer on the key region displayed on the image display device.

Referring to FIG. 8, first, the image display device 100 displays the first region and the second region on the display unit 170 and displays at least one object through which the function is activated with the pointing signal, on the second region (S810).

Here, on the display unit 170, the first region is a region that is present out of the region on which the object is displayed. The first region includes, for example, a background screen of the object, a broadcast screen, a moving image/audio reproduction screen and an application execution screen.

Here, on the display unit 170, the second region is a predetermined region on which the object is displayed. For example, the second region means an area of the object. In addition, the object displayed on the second region is one or more, and the second region displayed on the display unit 170 is one or more.

In addition, the object through which the function is activated with the pointing signal means the object through which the predetermined function is executed with the input signal transmitted from the external input device 200 or the object through which the screen switch is made.

Such an object includes, for example, a control key of the image display device 100, a smart menu, an icon for executing an application such as a web browser, a thumbnail image, and a user interface including a specific text or image. In addition, the object according to the embodiments of the present invention is limited to the predetermined size or smaller.

The image display device 100 receives the pointing signal from the external input device 200, for example, the spatial remote controller 200 (S820).

Here, the pointing signal means a value that is output as a result of sensing the movement through the gyro sensor 231 and the acceleration sensor 232 of the spatial remote controller 200. In addition, the pointing signal may mean the value of the input signal that is input through an input device, such as the touch pad, the trackball, and the track pad, provided in the spatial remote controller 200.

Here, the touch pad is an input device that moves the pointer according to a pressure that, when a user's finger or a pen comes into contact with a pad, is applied to the pad, or according to a movement of the user's finger or the pen along the pad. In addition, the trackball is an input device with which the user moves the pointer displayed on the display unit 170 of the image display device 100 or controls the icon displayed on the display unit 170 by rolling a ball provided in the spatial remote controller 200 with his/her hand. In addition, the track pad is the input device that moves the pointer displayed on the display unit 170, based on the movement sensed through the input by the finger, the pen or the like, or through the static electricity.

If the pointer displayed according to the pointing signal received from the spatial remote controller is moved within the first region, the controller 150 performs the control in such a manner that the pointer is moved at the first moving speed (S830).

Here, the first moving speed is an initial speed corresponding to is a predetermined region of the spatial remote controller 200 and is determined through the user input or as a predetermined value.

The controller 150 determines if the pointer displayed according to the pointing signal received from the spatial remote controller is positioned on a border between the first region and the second region (S840). Here, the border between the first region and the second region means a boundary or an outer edge of the object or the second region.

When the pointer is positioned on the border between the first region and the second region as a result of the determination (S840), the controller 150 outputs a predetermined alarm signal (S850).

More specifically, when the pointer passes the border between the first region and the second region, the controller 150 outputs a predetermined sound effect through the audio output unit 180. In addition, the controller 150 outputs the highlighting effect to the border on the display unit 170, along with the predetermined sound effect.

In addition, the controller 150 generates and transmits a control signal for enabling the spatial remote controller 200 when the pointer passes the border between the first region and the second region. Here, the first vibration means a haptic vibration with a predetermined strength.

When the pointer is not positioned on the border between the first region and the second region as a result of the determination (S840) or the predetermined alarm signal is output in Step S850, the controller 150 determines whether the pointer is positioned within the second region (S860). Here, when the pointer is not positioned on the border between the first region and the second region, but is positioned within the second region, for example, this means that the coordinates of the pointer corresponding to the pointing signal received from the external input device 200 is originally included within the second region.

When the pointer is positioned within the second region as a result of the determination in Step S860, the controller 150 determines the second moving speed as a speed in proportion to the area of the second region (S870). Here, the second moving speed is a speed that corresponds to the pointing signal transmitted from the spatial remote controller 200 and that is lower than the first moving speed. The second moving speed is determined in proportion to the calculated second region. For example, as the area of the second region is smaller, the second moving speed is determined as being a lower speed.

When the pointer is moved within the second region, the controller 150 performs in such a manner that the pointer is moved at the second moving speed as determined and outputs the alarm signal corresponding to the second moving speed (S880).

More specifically, the controller 150 generates and transmits a control signal for enabling the spatial remote controller 200 to output a second vibration corresponding to the second moving speed while the pointer is moved within the second region. Here, a strength of the second vibration is in proportion to the second moving speed.

In addition, the controller 150 controls the display unit 170 in such a manner that while the pointer is moved within the second region, the pointer is output in the different form from that of the pointer on the first region. For example, referring back to FIG. 5F, when the pointer is positioned on the region (the "first region") on which the object 501f is not displayed, the controller 150 outputs, for example, the pointer in the form of a cursor 101a. When the pointer enters the region (the "second region") on which the object 501f is displayed, the controller 150 outputs, for example, the pointer in the form of a hand 101b.

As described above, according to the embodiment of the present invention, the alarm effect is output that corresponds to the change in the moving speed that occurs when the pointer enters the key region displayed on the image display device. This provides the user with the intuitive recognition.

A method of operating the image display device is described below referring to FIGS. 1, 2 and 9. The method is for determining whether the moving speed is changed and setting the extent to which the moving speed is changed when moving the pointer displayed on the display unit 170.

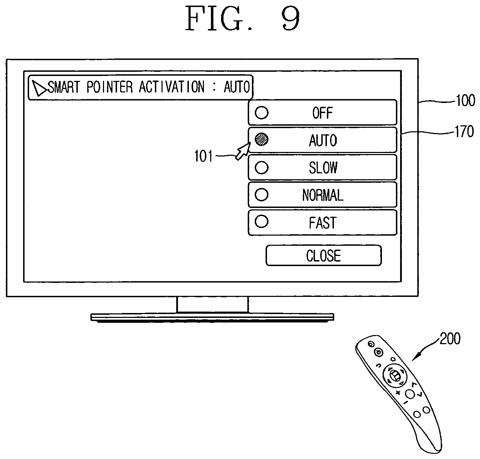

With relation to this, FIG. 9 is a diagram illustrating the user interface for setting the moving speed of the pointer displayed on the image display device 100.

The user interface through which to input a control command to trigger any one of a first control mode and a second control mode according to a predetermined input signal is output to the display unit 170 of the image display device 100.

The interface unit 140 receives the control command from the spatial remote controller 200 through the use of the user interface that is output. Here, the control command refers to a command for triggering at least one of the first control mode and the second control mode. The first control mode and the second are different in how to determine whether to change the moving speed of the pointer displayed on the display unit 170 after the pointer enters a predetermined region.

When receiving the control command corresponding to the first control mode, the controller 150 performs the control in such a manner that the pointer is moved at the predetermined moving speed, that is, at the moving speed corresponding to the pointing signal received from the spatial remote controller 200, on the first region (the region on which the above-described object is not displayed) and the second region (the region on which the above-described object is displayed). On the other hand, when receiving the control command corresponding to the second control mode, the controller 150 performs the control in such a manner that after entering the second region from the first region, the pointer is moved at the speed lower than the predetermined moving speed.

With relation to this, referring to FIG. 9, when the key "AUTO" is selected from a mode "SMART POINTER ACTIVATION" displayed on the display unit 170 as illustrated in FIG. 9, the controller 150 triggers the second control mode in order for the pointer to be moved at the speed lower than the predetermined moving speed on the second region. On the other hand, when the key "OFF" is selected from the mode "SMART POINTER ACRTIVATION," the controller 150 triggers the first mode in order for the pointer to be moved at the same speed on the first region and the second region. According to the embodiment of the present invention, whether the moving speed of the pointer is changed is selectively determined in this manner depending on the user input.

In addition, the controller 150 sets speed information with respect to at least one of the first moving speed and the second moving speed, based on the user input through the interface unit 140. Here, the first moving speed means a speed at which the pointer is moved when on the first region, and the second moving speed means a speed at which the pointer is moved when on the second region. The second moving speed is lower than the first moving speed.

More specifically, the controller 150 sets the first moving speed, the second moving speed, a ratio of the first moving speed to the second moving speed, or the like, based on the user input through the interface unit 140.

With relation to this, referring back to FIG. 9, when one key is selected from the keys "SLOW," "NORMAL," and "FAST," that are output to the display unit 170, according to the input signal transmitted from the spatial remote controller as illustrated in FIG. 9, the controller 150 sets the speed information with respect to the first moving speed or the second moving speed corresponding to the selected key. In addition, although not illustrated, the ratio of the first moving speed to the second moving speed is set using a predetermined key or a combination of the keys.

In the image display device and the method of operating the image display device according to the embodiment of the present invention, the moving speed of the pointer is made to be lower when the pointer corresponding to the pointing signal enters the key region in selecting the key displayed on the image display device through the use of the pointing signal transmitted from the external input device. This prevents the pointer from being easily moved out of the key region. Thus, the user can perform the exact control that he/she wants.

In addition, in the image display device and the method of operating the image display device according to the embodiment of the present invention, the extent to which the moving speed of the pointer is changed varies depending on the size or form of the key displayed on the image display device. This provides the user convenience in that the user can perform the control with precision although the key is small in size or complex in form.

In addition, in the image display device and the method of operating the image display device according to the embodiment of the present invention, the predetermined alarm effect is output that corresponds to the change in the moving speed that occurs when the pointer enters the key region displayed on the image display device. This provides the user with the intuitive recognition.

## Claims

1. An image display device (100) comprising:
a display unit (170) on which a first region and a second region are displayed, the second region on which at least one object through which a function is activated with a pointing signal is displayed;
an interface unit (140) through which the pointing signal is received from a spatial remote controller (200); and
a controller (150) that, when a pointer displayed according to the received pointing signal is moved within the first region, performs control in such a manner that the pointer is moved at a first moving speed, and that, when the pointer displayed according to the received pointing signal is moved within the second region, performs the control in such a manner that the pointer is moved at a second moving speed lower than the first moving speed,
**characterized in that** the second moving speed is variable in dependence of at least one of a size or form of an object displayed in the second region, and the controller (150) further performs control in such a manner that the pointer is stopped for a predetermined time when a form of the object on which the pointer is positioned is a complicated form or a size of the object on which the pointer is positioned is smaller than a predetermined size.

2. The image display device of claim 1, wherein the controller (150) adjusts the second moving speed in proportion to an area of at least one of the object and the second region on which the object is displayed.

3. The image display device (100) of claim 1, wherein the controller (150) calculates a transverse-direction length and a longitudinal-direction length of the second region, and
wherein if the calculated transverse-direction length is greater than the calculated longitudinal-direction length, the controller (150) performs the control in such a manner that when the pointer is moved within the second region in the longitudinal direction, the pointer is moved at a third moving speed lower than the second moving speed, and if the calculated longitudinal-direction length is greater than the calculated transverse-direction length, the controller (150) performs the control in such a manner that when the pointer is moved within the second region in the transverse direction, the pointer is moved at the third moving speed lower than the second moving speed.

4. The image display device (100) of claim 1, wherein the controller (150) sets speed information with respect to at least one of the first moving speed and the second moving speed, based on a user input.

5. The image display device (100) of claim 1, further comprising:
a storage unit (160) that stores a usage pattern corresponding to the extent to which the spatial remote controller (200) trembles,
wherein the controller (150) determines the second moving speed according to the usage pattern stored in the storage unit (160).

6. The image display device (100) of claim 1, wherein the controller (150) performs the control in such a manner that the pointer is moved at the first moving speed according to the pointing signal for a predetermined time after the pointer enters the second region, and the pointer is moved at the second moving speed lower than the first moving speed according to the pointing signal when the predetermined time elapses after the pointer enters the second region.

7. The image display device (100) of claim 1, wherein when the pointer is positioned on a border region between the first region and the second region, the controller (150) performs the control in such a manner that the pointer is moved at the first moving speed, and when the pointer is moved out of the border region and enters the second region, the controller (150) performs the control in such a manner that the pointer is moved at the second moving speed lower than the first moving speed.

8. The image display device (100) of claim 1, further comprising:
an output unit (180) that outputs a sound effect,
wherein when the pointer passes a border between the first region and the second region, the controller (150) performs the control in such a manner that the sound effect is output.

9. The image display device (100) of claim 1, wherein when the pointer passes a border between the first region and the second region, the controller (150) generates a control signal for enabling the spatial remote controller (200) to output a first vibration.

10. The image display device (100) of claim 9, wherein while the pointer is moved within the second region, the controller (150) generates a control signal for enabling the spatial remote controller (200) to output a second vibration corresponding to the second moving speed.

11. The image display device (100) of claim 1, wherein the controller (150) outputs the pointer in such a manner that the pointer on the first region and the pointer on the second region are different in form from each other.

12. The image display device (100) of claim 1, wherein when the pointer is moved closer to the second region, the controller (150) changes a form of the object displayed on the second region and outputs the object in the changed form.

13. A method of operating an image display device, comprising:
displaying a first region and a second region and displaying at least one object through which a function is activated with a pointing signal on the second region;
receiving the pointing signal from a spatial remote controller (200);
performing control in such a manner that a pointer is moved at a first moving speed, when the pointer displayed according to the received pointing signal is moved within the first region; and
performing the control in such a manner that the pointer is moved at a second moving speed lower than the first moving speed, when the pointer displayed according to the received pointing signal is moved within the second region;
**characterized in that** the method further comprises:
varying the second moving speed in dependence of at least one of a size or form of an object displayed in the second region; and
performing control in such a manner that the pointer is stopped for a predetermined time when a form of the object on which the pointer is positioned is a complicated form or a size of the object on which the pointer is positioned is smaller than a predetermined size.

14. The method of claim 13, further comprising adjusting the second moving speed in proportion to an area of at least one of the object and the second region on which the object is displayed.

15. The method of claim 13, further comprising:
calculating a transverse-direction length and a longitudinal-direction length of the second region; and
performing control in such a manner that when the pointer is moved within the second region in the longitudinal direction, the pointer is moved at a third moving speed lower than the second moving speed, if the calculated transverse-direction length is greater than the calculated longitudinal-direction length, and performing the control in such a manner that when the pointer is moved within the second region in the transverse direction, the pointer is moved at the third moving speed lower than the second moving speed, if the calculated longitudinal-direction length is greater than the calculated transverse-direction length.

## Patentansprüche

1. Bildanzeigevorrichtung (100), umfassend:
eine Anzeigeeinheit (170), auf der ein erster Bereich und ein zweiter Bereich angezeigt werden, wobei in dem zweiten Bereich mindestens ein Objekt angezeigt wird, mittels dessen durch ein Zeigersignal eine Funktion aktiviert wird;
eine Schnittstelleneinheit (140), mittels der das Zeigersignal von einer räumlich entfernten Steuerung (200) empfangen wird; und
eine Steuerung (150), die, wenn ein entsprechend des empfangenen Zeigersignals angezeigter Zeiger innerhalb des ersten Bereichs bewegt wird, eine Steuerung in solcher Weise ausführt, dass der Zeiger mit einer ersten Bewegungsgeschwindigkeit bewegt wird, und die, wenn der entsprechend des empfangenen Zeigersignals angezeigte Zeiger innerhalb des zweiten Bereichs bewegt wird, die Steuerung in solcher Weise ausführt, dass der Zeiger mit einer zweiten Bewegungsgeschwindigkeit bewegt wird, die geringer ist als die erste Bewegungsgeschwindigkeit,
**dadurch gekennzeichnet, dass** die zweite Bewegungsgeschwindigkeit in Abhängigkeit von einer Größe und/oder Form eines in dem zweiten Bereich angezeigten Objekts veränderbar ist und die Steuerung (150) eine Steuerung ferner in solcher Weise ausführt, dass der Zeiger für eine vorbestimmte Zeit gestoppt wird, wenn eine Form des Objekts, auf dem der Zeiger positioniert ist, eine komplizierte Form oder eine Größe des Objekts, auf dem der Zeiger positioniert ist, kleiner als eine vorgegebene Größe ist.

2. Bildanzeigevorrichtung nach Anspruch 1, wobei die Steuerung (150) die zweite Bewegungsgeschwindigkeit im Verhältnis zu einem Gebiet des Objekts und/oder des zweiten Bereichs anpasst, in dem das Objekt angezeigt wird, anpasst.

3. Bildanzeigevorrichtung (100) nach Anspruch 1, wobei die Steuerung (150) eine Länge in einer Querrichtung sowie eine Länge in einer Längsrichtung des zweiten Bereichs berechnet, und
wobei die Steuerung (150), falls die berechnete Querrichtungslänge größer ist als die berechnete Längsrichtungslänge, die Steuerung in solcher Weise ausführt, dass, wenn der Zeiger innerhalb des zweiten Bereichs in der Längsrichtung bewegt wird, der Zeiger mit einer dritten Bewegungsgeschwindigkeit bewegt wird, die geringer ist als die zweite Bewegungsgeschwindigkeit, und die Steuerung (150), falls die berechnete Längsrichtungslänge größer ist als die berechnete Querrichtungslänge, die Steuerung in solcher Weise ausführt, dass, wenn der Zeiger innerhalb des zweiten Bereichs in der Querrichtung bewegt wird, der Zeiger mit der dritten Bewegungsgeschwindigkeit bewegt wird, die geringer ist als die zweite Bewegungsgeschwindigkeit.

4. Bildanzeigevorrichtung (100) nach Anspruch 1, wobei die Steuerung (150) Geschwindigkeitsinformationen in Bezug auf die erste Bewegungsgeschwindigkeit und/oder die zweite Bewegungsgeschwindigkeit auf Basis einer Benutzereingabe einstellt.

5. Bildanzeigevorrichtung (100) nach Anspruch 1, ferner umfassend:
eine Speichereinheit (160), die ein Verwendungsmuster speichert, das dem Ausmaß entspricht, in dem die räumlich entfernte Steuerung (200) zittert,
wobei die Steuerung (150) die zweite Bewegungsgeschwindigkeit gemäß des in der Speichereinheit (160) gespeicherten Verwendungsmusters bestimmt.

6. Bildanzeigevorrichtung (100) nach Anspruch 1, wobei die Steuerung (150) die Steuerung in solcher Weise ausführt, dass der Zeiger gemäß dem Zeigersignal für eine vorbestimmte Zeit nachdem der Zeiger in den zweiten Bereich eintritt mit der ersten Bewegungsgeschwindigkeit bewegt wird und der Zeiger gemäß dem Zeigersignal mit der zweiten Bewegungsgeschwindigkeit bewegt wird, die geringer ist als die erste Bewegungsgeschwindigkeit, wenn die vorbestimmte Zeit nachdem der Zeiger in den zweiten Bereich eintritt verstreicht.

7. Bildanzeigevorrichtung (100) nach Anspruch 1, wobei die Steuerung (150), wenn der Zeiger in einer Grenzregion zwischen dem ersten Bereich und dem zweiten Bereich positioniert ist, die Steuerung in solcher Weise ausführt, dass der Zeiger mit der ersten Bewegungsgeschwindigkeit bewegt wird, und die Steuerung (150), wenn der Zeiger aus der Grenzregion hinaus bewegt wird und in den zweiten Bereich eintritt, die Steuerung in solcher Weise ausführt, dass der Zeiger mit der zweiten Bewegungsgeschwindigkeit bewegt wird, die geringer ist als die erste Bewegungsgeschwindigkeit.

8. Bildanzeigevorrichtung (100) nach Anspruch 1, ferner umfassend:
eine Ausgabeeinheit-(180), die einen Soundeffekt ausgibt,
wobei die Steuerung (150), wenn der Zeiger eine Grenze zwischen dem ersten Bereich und dem zweiten Bereich übertritt, die Steuerung in solcher Weise ausführt, dass der Soundeffekt ausgegeben wird.

9. Bildanzeigevorrichtung (100) nach Anspruch 1, wobei die Steuerung (150), wenn der Zeiger eine Grenze zwischen dem ersten Bereich und dem zweiten Bereich übertritt, ein Steuersignal erzeugt, das es der räumlich entfernten Steuerung (200) gestattet, eine erste Vibration auszugeben.

10. Bildanzeigevorrichtung (100) nach Anspruch 9, wobei die Steuerung (150), während der Zeiger innerhalb des zweiten Bereichs bewegt wird, ein Steuersignal erzeugt, das es der räumlich entfernten Steuerung (200) gestattet, eine zweite Vibration auszugeben, die der zweiten Bewegungsgeschwindigkeit entspricht.

11. Bildanzeigevorrichtung (100) nach Anspruch 1, wobei die Steuerung (150) den Zeiger in solcher Weise ausgibt, dass sich der Zeiger in dem ersten Bereich und der Zeiger in dem zweiten Bereich in ihrer Form voneinander unterscheiden.

12. Bildanzeigevorrichtung (100) nach Anspruch 1, wobei die Steuerung (150), wenn der Zeiger näher an den zweiten Bereich heran bewegt wird, eine Form des in dem zweiten Bereich angezeigten Objekts ändert und das Objekt in der veränderten Form ausgibt.

13. Verfahren zum Betreiben einer Bildanzeigevorrichtung, umfassend:
Anzeigen eines ersten Bereichs und eines zweiten Bereichs und Anzeigen mindestens eines Objekts, mittels dessen durch ein Zeigersignal im zweiten Bereich eine Funktion aktiviert wird;
Empfangen des Zeigersignals von einer räumlich entfernten Steuerung (200);
Ausführen einer Steuerung in solcher Weise, dass ein Zeiger mit einer ersten Bewegungsgeschwindigkeit bewegt wird, wenn der entsprechend des empfangenen Zeigersignals angezeigte Zeiger innerhalb des ersten Bereichs bewegt wird; und
Ausführen der Steuerung in solcher Weise, dass der Zeiger mit einer zweiten Bewegungsgeschwindigkeit bewegt wird, die geringer ist als die erste Bewegungsgeschwindigkeit, wenn der entsprechend des empfangenen Zeigersignals angezeigte Zeiger innerhalb des zweiten Bereichs bewegt wird;
**dadurch gekennzeichnet, dass** das Verfahren ferner-umfasst:
Verändern der zweiten Bewegungsgeschwindigkeit in Abhängigkeit von einer Größe und/oder Form eines in dem zweiten Bereich angezeigten Objekts; und
Ausführen einer Steuerung in solcher Weise, dass der Zeiger für eine vorbestimmte Zeit gestoppt wird, wenn eine Form des Objekts, auf dem der Zeiger positioniert ist, eine komplizierte Form oder eine Größe des Objekts, auf dem der Zeiger positioniert ist, kleiner als eine vorbestimmte Größe ist.

14. Verfahren nach Anspruch 13, ferner umfassend das Anpassen der zweiten Bewegungsgeschwindigkeit im Verhältnis zu einem Gebiet des Objekts und/oder des zweiten Bereichs, in dem das Objekt angezeigt wird.

15. Verfahren nach Anspruch 13, ferner umfassend:
Berechnen einer Länge in Querrichtung und einer Länge in Längsrichtung des zweiten Bereichs; und
Ausführen einer Steuerung in solcher Weise, dass der Zeiger, wenn der Zeiger innerhalb des zweiten Bereichs in der Längsrichtung bewegt wird, mit einer dritten Bewegungsgeschwindigkeit bewegt wird, die geringer ist als die zweite Bewegungsgeschwindigkeit, falls die berechnete Querrichtungslänge größer ist als die berechnete Längsrichtungslänge, und Ausführen der Steuerung in solcher Weise, dass der Zeiger, wenn der Zeiger innerhalb des zweiten Bereichs in der Querrichtung bewegt wird, mit der dritten Bewegungsgeschwindigkeit bewegt wird, die geringer ist als die zweite Bewegungsgeschwindigkeit, falls die berechnete Längsrichtungslänge größer ist als die berechnete Querrichtungslänge.

## Revendications

1. Dispositif (100) d'affichage d'image comprenant :
une unité (170) d'affichage sur laquelle une première région et une deuxième région sont affichées, la deuxième région sur laquelle au moins un objet par l'intermédiaire duquel une fonction est activée avec un signal de pointage est affiché ;
une unité (140) d'interface par l'intermédiaire de laquelle le signal de pointage est reçu d'un contrôleur (200) spatial distant ; et
un contrôleur (150) qui, lorsqu'un pointeur affiché en fonction du signal de pointage reçu est déplacé à l'intérieur de la première région, exécute une commande de telle manière que le pointeur est déplacé à une première vitesse de déplacement, et qui, lorsque le pointeur affiché en fonction du signal de pointage reçu est déplacé à l'intérieur de la deuxième région, exécute la commande de telle manière que le pointeur est déplacé à une deuxième vitesse de déplacement inférieure à la première vitesse de déplacement,
**caractérisé en ce que** la deuxième vitesse de déplacement est variable en fonction d'au moins une d'une taille ou d'une forme d'un objet affiché dans la deuxième région, et le contrôleur (150) exécute en outre une commande de telle manière que le pointeur est stoppé sur une durée prédéterminée lorsqu'une forme de l'objet sur lequel le pointeur est positionné est une forme compliquée ou qu'une taille de l'objet sur lequel le pointeur est positionné est plus petite qu'une taille prédéterminée.

2. Dispositif d'affichage d'image selon la revendication 1, dans lequel le contrôleur (150) ajuste la deuxième vitesse de déplacement en proportion d'une zone d'au moins un(e) de l'objet et de la deuxième région sur laquelle l'objet est affiché.

3. Dispositif (100) d'affichage d'image selon la revendication 1, dans lequel le contrôleur (150) calcule une longueur dans le sens transversal et une longueur dans le sens longitudinal de la deuxième région, et
dans lequel, si la longueur dans le sens transversal calculée est supérieure à la longueur dans le sens longitudinal calculée, le contrôleur (150) exécute la commande de telle manière que, lorsque le pointeur est déplacé à l'intérieur de la deuxième région dans le sens longitudinal, le pointeur est déplacé à une troisième vitesse de déplacement inférieure à la deuxième vitesse de déplacement, et, si la longueur dans le sens longitudinal calculée est supérieure à la longueur dans le sens transversal calculée, le contrôleur (150) exécute la commande de telle manière que, lorsque le pointeur est déplacé à l'intérieur de la deuxième région dans le sens transversal, le pointeur est déplacé à la troisième vitesse de déplacement inférieure à la deuxième vitesse de déplacement.

4. Dispositif (100) d'affichage d'image selon la revendication 1, dans lequel le contrôleur (150) fixe une information de vitesse en ce qui concerne au moins une de la première vitesse de déplacement et de la deuxième vitesse de déplacement, sur la base d'une entrée d'utilisateur.

5. Dispositif (100) d'affichage d'image selon la revendication 1, comprenant en outre :
une unité (160) de stockage qui stocke un modèle d'utilisation correspondant à la mesure dans laquelle le contrôleur (200) spatial distant tremble,
dans lequel le contrôleur (150) détermine la deuxième vitesse de déplacement en fonction du modèle d'utilisation stocké dans l'unité (160) de stockage.

6. Dispositif (100) d'affichage d'image selon la revendication 1, dans lequel le contrôleur (150) exécute la commande de telle manière que le pointeur est déplacé à la première vitesse de déplacement en fonction du signal de pointage sur une durée prédéterminée après que le pointeur est entré dans la deuxième région, et le pointeur est déplacé à la deuxième vitesse de déplacement inférieure à la première vitesse de déplacement en fonction du signal de pointage lorsque la durée prédéterminée expire après que le pointeur est entré dans la deuxième région.

7. Dispositif (100) d'affichage d'image selon la revendication 1, dans lequel, lorsque le pointeur est positionné sur une région de limite entre la première région et la deuxième région, le contrôleur (150) exécute la commande de telle manière que le pointeur est déplacé à la première vitesse de déplacement, et lorsque le pointeur est sorti de la région de limite et entre dans la deuxième région, le contrôleur (150) exécute la commande de telle manière que le pointeur est déplacé à la deuxième vitesse de déplacement inférieure à la première vitesse de déplacement.

8. Dispositif (100) d'affichage d'image selon la revendication 1, comprenant en outre :
une unité (180) de sortie qui sort un effet sonore,
dans lequel, lorsque le pointeur passe une limite entre la première région et la deuxième région, le contrôleur (150) exécute la commande de telle manière que l'effet sonore est délivré en sortie.

9. Dispositif (100) d'affichage d'image selon la revendication 1, dans lequel, lorsque le pointeur passe une limite entre la première région et la deuxième région, le contrôleur (150) génère un signal de commande pour permettre au contrôleur (200) spatial distant de délivrer en sortie une première vibration.

10. Dispositif (100) d'affichage d'image selon la revendication 9, dans lequel, tandis que le pointeur est déplacé à l'intérieur de la deuxième région, le contrôleur (150) génère un signal de commande pour permettre au contrôleur (200) spatial distant de délivrer en sortie une deuxième vibration correspondant à la deuxième vitesse de déplacement.

11. Dispositif (100) d'affichage d'image selon la revendication 1, dans lequel le contrôleur (150) délivre en sortie le pointeur de telle manière que le pointeur sur la première région et le pointeur sur la deuxième région sont différents en forme l'un de l'autre.

12. Dispositif (100) d'affichage d'image selon la revendication 1, dans lequel, lorsque le pointeur est rapproché de la deuxième région, le contrôleur (150) change une forme de l'objet affiché sur la deuxième région et délivre en sortie l'objet à la forme changée.

13. Procédé de fonctionnement d'un dispositif d'affichage d'image, comprenant :
l'affichage d'une première région et d'une deuxième région et l'affichage d'au moins un objet par l'intermédiaire duquel une fonction est activée avec un signal de pointage sur la deuxième région ;
la réception du signal de pointage d'un contrôleur (200) spatial distant ;
l'exécution d'une commande de telle manière qu'un pointeur est déplacé à une première vitesse de déplacement, lorsque le pointeur affiché en fonction du signal de pointage reçu est déplacé à l'intérieur de la première région ; et
l'exécution de la commande de telle manière que le pointeur est déplacé à une deuxième vitesse de déplacement inférieure à la première vitesse de déplacement, lorsque le pointeur affiché en fonction du signal de pointage reçu est déplacé à l'intérieur de la deuxième région ;
**caractérisé en ce que** le procédé comprend en outre :
la variation dé la deuxième vitesse de déplacement en fonction d'au moins une d'une taille ou d'une forme d'un objet affiché dans la deuxième région ; et
l'exécution d'une commande de telle manière que le pointeur est stoppé sur une durée prédéterminée lorsqu'une forme de l'objet sur lequel le pointeur est positionné est une forme compliquée ou qu'une taille de l'objet sur lequel le pointeur est positionné est plus petite qu'une taille prédéterminée.

14. Procédé selon la revendication 13, comprenant en outre l'ajustement de la deuxième vitesse de déplacement en proportion d'une zone d'au moins un(e) de l'objet et de la deuxième région sur laquelle l'objet est affiché.

15. Procédé selon la revendication 13, comprenant en outre :
le calcul d'une longueur dans le sens transversal et d'une longueur dans le sens longitudinal de la deuxième région ; et
l'exécution d'une commande de telle manière que, lorsque le pointeur est déplacé à l'intérieur de la deuxième région dans le sens longitudinal, le pointeur est déplacé à une troisième vitesse de déplacement inférieure à la deuxième vitesse de déplacement, si la longueur dans le sens transversal calculée est supérieure à la longueur dans le sens longitudinal calculée, et l'exécution de la commande de telle manière que, lorsque le pointeur est déplacé à l'intérieur de la deuxième région dans le sens transversal, le pointeur est déplacé à la troisième vitesse de déplacement inférieure à la deuxième vitesse de déplacement, si la longueur dans le sens longitudinal calculée est supérieure à la longueur dans le sens transversal calculée.
